# EUROPEAN PATENT APPLICATION

(11) **EP 1 331 629 A1**
(43) Date of publication of application: **30.07.2003**
(21) Application number: 01965573.7
(22) Date of filing: 12.09.2001
(51) Int. Cl.: G10K 15/02, G10L 19/00, G06F 17/30, G06F 13/00

(54) **DATA DISTRIBUTION SYSTEM, DATA DISTRIBUTION METHOD, DATA DISTRIBUTION APPARATUS, SERVER, MEDIUM, AND PROGRAM**

(30) Priority: 14.09.2000 JP 2000279850
(71) Applicant: MATSUSHITA ELECTRIC INDUSTRIAL CO., LTD., Kadoma-shi, Osaka 571-8501 (JP)
(72) Inventor: KOBAYASHI, Hideaki, Kobe-shi, Hyogo 651-0073 (JP); TSUDA, Kenjirou, Hirakata-shi, Osaka 573-0075 (JP); NISHIGORI, Yoshihisa, Osaka 563-0028 (JP); NISHII, Yoshimi, Takatsuki-shi, Osaka 569-0022 (JP)
(74) Representative: Grünecker, Kinkeldey, Stockmair & Schwanhäusser Anwaltssozietät
(86) International application number: JP0107895
(87) International publication number: WO02023522

(57) **Abstract**

A data distributing system of the present invention is a data distributing system provided with: information providing apparatuses 103a and 103b of providing data that is to be an object of distribution; an information accepting apparatus 111 of accepting the provided data; a distribution information storing apparatus 114a of storing the accepted data as distributable data; an information distributing apparatus 116a of distributing, as voice data, at least a principal part of the distributable data through networks 102a and 102b based on (1) a request for distribution of data desired by a receiving side and/or (2) the number of times based on a predetermined criterion; and information transmitting and receiving apparatuses 104a to 104c of obtaining the distributed data.

## Description

### TECHNICAL FIELD

The present invention relates to a data distributing system, a data distributing method, a data transmitting apparatus, a server, a data providing apparatus, a terminal apparatus, a data reproducing terminal apparatus, a medium and a program of distributing voice information by use of, for example, the Internet.

### BACKGROUND ART

Examples of information distributing systems using the Internet include electronic mail. Moreover, mail magazines which are a character information service using electronic mail have rapidly been spreading.

However, such a mail magazine system faces a problem that information cannot be displayed unless an information terminal having a display screen such as a personal computer is used because contents are character information by electronic mail. Moreover, it is difficult for the user to read the information while doing other things.

Moreover, in electronic mail, in addition to characters, information such as program files, voice data files, image data files and document files can be distributed by being attached to electronic mail messages.

However, in the electronic mail system, electronic mail messages normally pass through a plurality of electronic mail servers before reaching from the sender to the receiver, and in the course thereof, not all servers allow the attachment of files and there is a limitation to the size of the attached files. In addition, there is a limitation to the capacity of the mail box of the mail server for reception (POP server). For these reasons, it is difficult to distribute an electronic mail message with an attachment of large-scale information of, for example, more than 10 megabytes. Although a service has been provided such that the user can download large-scale information such as a program file from a predetermined home page by accessing the home page every time, such an operation is cumbersome for the user.

### DISCLOSURE OF INVENTION

In view of the above-mentioned problem of the prior art, an object of the present invention is to provide a data distributing system, for example, with which the user can enjoy voice information comprising contents desired by him or her.

Moreover, in view of the above-mentioned problem of the prior art, an object of the present invention is to realize a new data distribution service, for example, of supplying voice information through the Internet.

Moreover, in view of the above-mentioned problem of the prior art, an object of the present invention is to provide a data distributing system, for example, enabling large-scale information to be distributed without any load on the user.

A first invention of the present invention (corresponding to Claim 1) is a data distributing system of performing distribution of data through a network the number of times based on a predetermined criterion, said data distributing system comprising:
a data providing apparatus of providing data that is to be an object of said distribution;
a data accepting apparatus of accepting data provided by said data providing apparatus;
a distribution data storing apparatus of storing, as distributable data, all or part of data accepted by said data accepting apparatus;
a data distributing apparatus of distributing, as voice data, at least a principal part of the distributable data through the network based on (1) a request for distribution of data desired by a receiving side and/or (2) the number of times;
a data obtaining apparatus of obtaining the data distributed by said data distributing apparatus; and
a reproducing apparatus of reproducing the voice data obtained by said data obtaining apparatus.

A second invention of the present invention (corresponding to Claim 2) is a data distributing system according to the first invention of the present invention, comprising:
a selected information accepting apparatus of accepting, through the network, selected information from the receiving side for selecting identification information of the desired data by use of a predetermined list;
a selected information storing apparatus of storing the selected information accepted by said selected information accepting apparatus;
an individual list distributing apparatus of creating, as an individual list, a list by means of extracting identification information of data common to both the stored selected information and the distributable data, and distributing the individual list to the receiving side; and
a distribution requesting apparatus of requesting distribution of the data desired by the receiving side as the request for distribution from the receiving side based on the distributed individual list,
wherein said data distributing apparatus distributes the data based on the request for distribution from said distribution requesting apparatus.

A third invention of the present invention (corresponding to Claim 3) is a data distributing system according to the second invention of the present invention, comprising a data storing apparatus of temporarily storing all of the data accepted by said data accepting apparatus,
wherein said distributable data is, of the data stored in the data storing apparatus, data that is determined to be distributable based on a predetermined criterion and is copied and stored in said distribution data storing apparatus, and
said selected information accepting apparatus transmits, as the predetermined list, a full list which is a list containing identification information of all of the data stored in said data storing apparatus, to said data obtaining apparatus through the network when an access is made from the receiving side.

A fourth invention of the present invention (corresponding to Claim 4) is a data distributing system according to the third invention of the present inveniton,
wherein said individual list distributing apparatus adds CM data for making an advertisement to the individual list, and distributes the individual list to said data obtaining apparatus.

A fifth invention of the present invention (corresponding to Claim 5) is a data distributing system according to the third invention of the present invention,
wherein said individual list distributing apparatus adds, to the individual list, location information indicating an address at which said data distributing apparatus is located, and distributes the individual list to said data obtaining apparatus, and
the request for distribution by said distribution requesting apparatus is made based on the location information.

A sixth invention of the present invention (corresponding to Claim 6) is a data distributing system according to the fifth invention of the present invention,
wherein said data obtaining apparatus, after the distributed data is obtained and stored, replaces the location information included in the individual list with address information of an area in which the storage is performed, and
said reproduction is performed based on the address information.

A seventh invention of the present invention (corresponding to Claim 7) is a data distributing system according to the fourth invention of the present invention,
wherein said data obtaining apparatus adds, to the obtained data, the CM data distributed being added to the individual list, and stores the data.

An eighth invention of the present invention (corresponding to Claim 8) is a data distributing system according to the seventh invention of the present invention,
wherein said reproducing apparatus comprises a display of displaying character data and/or image data;
said CM data includes character data and/or image data; and
the character data and/or the image data included in the stored CM data is displayed by use of said display.

A ninth invention of the present invention (corresponding to Claim 9) is a data distributing system according to the fifth invention of the present invention, wherein said distribution data storing apparatus and said data distributing apparatus are provided in a plural number,
the distributable data of the data stored in said data storing apparatus is copied and stored so as to be dispersed to said plural distribution data storing apparatuses,
said data distributing apparatus and said distribution data storing apparatus have a predetermined correspondence with each other, and
said location information is generated based on the dispersion of the distributable data to said plural distribution data storing apparatuses.

A tenth invention of the present invention (corresponding to Claim 10) is a data distributing system according to the third invention of the present invention,
wherein said individual list distributing apparatus is provided in a plural number, and
to said individual list, information for said data obtaining apparatus to change the individual list distributing apparatus to which the individual list is to be distributed thereafter is added.

An eleventh invention of the present invention (corresponding to Claim 11) is a data distributing system according to the eighth invention of the present invention,
wherein said individual list includes expiration date data indicating an expiration date of the CM data; and
said CM data is reproduced based on the expiration date data.

A twelfth invention of the present invention (corresponding to Claim 12) is a data distributing system according to the third invention of the present invention,
wherein said reproducing apparatus reproduces the data obtained by the data obtaining apparatus after converting all or part of the data into a different format.

A thirteenth invention of the present invention (corresponding to Claim 13) is a data distributing system according to the twelfth invention of the present invention, comprising a character display apparatus of displaying character data,
wherein said reproducing the obtained data after converting all or part of the data into a different format is that (1) of the obtained data, all or part of voice data is converted into character data and the character data is displayed by use of said character display apparatus or that (2) when the obtained data includes character data, all or part of the character data is converted into voice data and the voice data is reproduced by use of said reproducing apparatus.

A fourteenth invention of the present invention (corresponding to Claim 14) is a data distributing system according to the third invention of the present invention,
wherein a principal part, distributed as the voice data, of the provided data that is to be an object of distribution is held as voice data.

A fifteenth invention of the present invention (corresponding to Claim 15) is a data distributing system according to the third invention of the present invention, comprising a data converting apparatus of converting the provided data to distribute at least a principal part of the distributable data as voice data through the network.

A sixteenth invention of the present invention (corresponding to Claim 16) is a data distributing system according to the third invention of the present invention,
wherein to the data that is to be an object of distribution, valid region information indicating a region where the distribution is effectively performed is added,
said receiving side transmits, together with said request for distribution, current location information indicating a current location where the request for distribution is made; and
said distribution of the data by said data distributing apparatus is performed based on the added valid region information and the transmitted current location information.

A seventeenth invention of the present invention (corresponding to Claim 17) is a data distributing system according to the third invention of the present invention,
wherein said network is the Internet; said data providing apparatus is a personal computer connected to the Internet and incorporating a software program of performing the provision;
means including said data accepting apparatus and said selected information accepting apparatus is a WWW server connected to the Internet;
said individual list distributing apparatus is a file server connected to the Internet;
said data distributing apparatus is a file server connected to the Internet;
said data obtaining apparatus is a personal computer connected to the Internet and incorporating a software program of performing the reception; and
said reproducing apparatus is a personal computer incorporating a software program of performing the reproduction.

An eighteenth invention of the present invention (corresponding to Claim 18) is a data distributing system according to the first invention of the present inveniton, comprising a distribution data identification information accepting apparatus of accepting, through the network, distribution data identification information, from the receiving side, for identifying identification information of the desired data by use of a predetermined list,
wherein said data distributing apparatus extracts data that is to be an object of distribution, from the stored distributable data based on the accepted distribution data identification information, and distributes the extracted data to the receiving side.

A nineteenth invention of the present invention (corresponding to Claim 19) is a data distributing system according to the eighteenth invention of the present invention,
wherein said data of which distribution is desired by the receiving side is data to be distributed over a plural number of times and contents of the pieces of data transmitted at the plural number of times are associated with each other,
said distribution data identification information includes reservation information indicating that the plural number of times of distribution is reserved, and
said data distributing apparatus performs the distribution based on the plural number of times.

A twentieth invention of the present invention (corresponding to Claim 20) is a data distributing system according to the nineteenth invention of the present invention,
wherein said predetermined list is a full list containing identification information of all of the accepted data and distributed to the receiving side through the network.

A twenty-first invention of the present invention (corresponding to Claim 21) is a data distributing system according to the second invention of the present inveniton,
wherein said individual list is updated based on the request for distribution from the receiving side, and is distributed to the receiving side.

A twenty-second invention of the present invention (corresponding to Claim 22) is a data distributing system according to the second invention of the present invention,
wherein said individual list is automatically updated based on update of the distributable data, and is distributed to the receiving side.

A twenty-third invention of the present invention (corresponding to Claim 23) is a data distributing system comprising:
a distribution data storing apparatus of storing, as distributable data, data that is to be an object of distribution through a network;
a selected information accepting apparatus of accepting selected information, from a receiving side, for selecting identification information of the data being desired by use of a predetermined list;
a selected information storing apparatus of storing the selected information accepted by said selected information accepting apparatus;
an individual list creating apparatus of creating, as an individual list, a list which is a part, of the predetermined list and at least includes identification information of data common to the selected information stored in said selected information storing apparatus and the distributable data;
a distribution requesting apparatus of identifying data of which distribution is desired based on the created individual list, and transmitting the data from the receiving side as a request for distribution; and
a data distributing apparatus of performing distribution of the data based on the request for distribution from said distribution requesting apparatus.

A twenty-fourth invention of the present invention (corresponding to Claim 24) is a data distributing system according to the twenty-third invention of the present invention,
wherein said predetermined list also contains data that is not distributable at the point of time when the selected information is accepted, but can become distributable after the point of time;
said selection of the data being desired is (1) a request for distribution of data which is distributable at the point of time and/or (2) a reservation of distribution of data which can become distributable after the point of time; and
said individual list creating apparatus inserts the reserved data as the distributable data into the individual list created after the point of time when the reserved data becomes distributable.

A twenty-fifth invention of the present invention (corresponding to Claim 25) is a data distributing system according to the twenty-fourth invention of the present invention,
wherein said individual list is updated based on the request for distribution from the receiving side, and is distributed to the receiving side.

A twenty-sixth invention of the present invention (corresponding to Claim 26) is a data distributing system according to the twenty-fourth invention of the present invention,
wherein said individual list is automatically updated when the reserved data becomes distributable, and is distributed to the receiving side.

A twenty-seventh invention of the present invention (corresponding to Claim 27) is a data distributing system according to the twenty-third invention of the present invention,
wherein to said data that is to be an object of distribution, valid region information indicating a region where the distribution is effectively performed is added;
said receiving side transmits, together with the request for distribution, current location information indicating a location where the request for distribution is made; and
said distribution of the data by said data distributing apparatus is performed based on the added valid region information and the transmitted current location information.

A twenty-eighth invention of the present invention (corresponding to Claim 28) is a data distributing system according to the twenty-third invention of the present invention,
wherein said network is the Internet; said selected information accepting apparatus is a WWW server connected to the Internet;
said individual list distributing apparatus is a file server connected to the Internet;
said distribution requesting apparatus is a personal computer connected to the Internet and incorporating a software program of performing transmission as the request for distribution; and
said data distributing apparatus is a file server connected to the Internet.

A twenty-ninth invention of the present invention (corresponding to Claim 29) is a data distributing method of a data distribution service provider performing data distribution service by using the data distributing system according to the fourth invention of the present invention,
wherein said CM data comprises CM voice data for making an advertisement by voice and/or CM character data for making an advertisement by characters which CM voice data and/or CM character data is provided by an advertiser; and
said data distribution service provider obtains an advertisement fee from the advertiser.

A thirtieth invention of the present invention (corresponding to Claim 30) is a data distributing method according to the twenty-ninth invention of the present invention,
wherein said data provider obtains a data provision fee from the data distribution service provider based on a selected data acceptance condition from a user.

A thirty-first invention of the present invention (corresponding to Claim 31) is a data distributing system comprising:
storing means of storing data;
distributing means of distributing data stored in said storing means;
network means of performing the distribution of the data by said distributing means; and
terminal means of receiving data distributed through said network means,
wherein said distribution is performed the number of times based on a predetermined criterion as distribution of data including voice data.

A thirty-second invention of the present invention (corresponding to Claim 32) is a data distributing apparatus comprising:
storing means of storing data; and
distributing means of distributing data stored in said storing means to a user's terminal through a network,
wherein said distribution is performed the number of times based on a predetermined criterion as distribution of data including voice data.

A thirty-third invention of the present invention (corresponding to Claim 33) is a data distributing system comprising:
storing means of storing data;
distributing means of distributing data stored in said storing means;
network means of performing the distribution of the data by said distributing means; and
terminal means of receiving data distributed through said network means,
wherein said distribution is performed as distribution of data including data other than music data. as voice data.

A thirty-fourth invention of the present invention (corresponding to Claim 34) is a data distributing apparatus comprising:
storing means of storing data; and
distributing means of distributing data stored in said storing means to a user's terminal through a network,
wherein said distribution is performed as distribution of data including data other than music data as voice data.

A thirty-fifth invention of the present invention (corresponding to Claim 35) is a server of performing distribution of data through a network the number of times based on a predetermined criterion, said server comprising:
a data accepting apparatus of accepting provision of the data that is to be an object of distribution;
a distribution data storing apparatus of storing, as distributable data, all or part of the data accepted by said data accepting apparatus; and
a data distributing apparatus of distributing, as voice data, at least a principal part of the distributable data through the network based on (1) a request for distribution of data desired by a receiving side and/or (2) the number of times.

A thirty-sixth invention of the present invention (corresponding to Claim 36) is a server comprising:
a distribution data storing apparatus of storing, as distributable data, data that is to be an object of distribution through a network;
a selected information accepting apparatus of accepting selected information, from a receiving side, for selecting identification information of the data being desired by use of a predetermined list;
a selected information storing apparatus of storing the selected information accepted by said selected information accepting apparatus;
an individual list creating apparatus of creating, as an individual list, a list which is a part of the predetermined list and at least includes identification information of data common to the selected information stored in said selected information storing apparatus and the distributable data; and
a data distributing apparatus of performing distribution of the data based on a request for distribution of the data of which distribution is desired which data is identified by the receiving side based on the created individual list.

A thirty-seventh invention of the present invention (corresponding to Claim 37) is a server comprising:
storing means of storing data; and
distributing means of distributing data stored in said storing means,
wherein said distribution of the data to a terminal apparatus by said distributing means through network means is performed the number of times based on a predetermined criterion as distribution of data including voice data.

A thirty-eighth invention of the present invention (corresponding to Claim 38) is a server comprising:
storing means of storing data; and
distributing means of distributing data including, as voice data, data that is other than music data and is stored in said storing means to a terminal, through network means.

A thirty-ninth invention of the present invention (corresponding to Claim 39) is a data providing apparatus of providing, through a network, data that is to be an object of distribution, to a server of performing distribution of the data to a terminal side the number of times based on a predetermined criterion,
said server comprising:
a data accepting apparatus of accepting the data provided by said data providing apparatus;
a distribution data storing apparatus of storing, as distributable data, all or part of the data accepted by said data accepting apparatus; and
a data distributing apparatus of distributing, as voice data, at least a principal part of the distributable data through the network based on (1) a request for distribution of data desired by a receiving side and/or (2) the number of times.

A fortieth invention of the present invention (corresponding to Claim 40) is a data providing apparatus of providing, through a network, data that is to be an object of distribution, to a server of performing distribution of the data to a terminal side,
said server comprising:
a distribution data storing apparatus of storing, as distributable data, the data that is to be an object of distribution through the network;
a selected information accepting apparatus of accepting selected information from a receiving side for selecting identification information of the data being desired by use of a predetermined list;
a selected information storing apparatus of storing the selected information accepted by said selected information accepting apparatus;
an individual list creating apparatus of creating, as an individual list, a list which is a part of the predetermined list and at least includes identification information of data common to the selected information stored in said selected information storing apparatus and the distributable data; and
a data distributing apparatus of performing the distribution of the data based on a request for distribution of the data of which distribution is desired which data is identified by the receiving side based on the created individual list.

A forty-first invention of the present invention (corresponding to Claim 41) is a data providing apparatus of providing, through a network, data that is to be an object of distribution, to a server of performing distribution of the data to a terminal,
said server comprising:
storing means of storing data; and
distributing means of distributing data stored in said storing means to the terminal through the network,
wherein said distribution of the data by said distributing means is performed the number of times based on a predetermined criterion as distribution of data including voice data.

A forty-second invention of the present invention (corresponding to Claim 42) is a data providing apparatus of providing, through a network, data that is to be an object of distribution, to a server of performing distribution of the data to a terminal,
said server comprising:
storing means of storing data; and
distributing means of distributing data including, as voice data, data that is other than music data and is stored in said storing means to the terminal through network means.

A forty-third invention of the present invention (corresponding to Claim 43) is a terminal apparatus of receiving distribution of data through a network from a server of performing the distribution of the data the number of times based on a predetermined criterion, and reproducing the data, said terminal apparatus comprising:
a data obtaining apparatus of obtaining at least a principal part of distributable data, the data distributed as voice data from said server through the network based on (1) a request for distribution of desired data and/or (2) the number of times; and
a reproducing apparatus of reproducing the voice data obtained by the data obtaining apparatus.

A forty-fourth invention of the present invention (corresponding to Claim 44) is a terminal apparatus of receiving distribution of data from a server comprising the following (1) to (5) and reproducing the data: (1) a distribution data storing apparatus of storing data that is to be an object of distribution through a network as distributable data; (2) a selected information accepting apparatus of accepting selected information from a receiving side for selecting identification information of the data being desired by use of a predetermined list; (3) a selected information storing apparatus of storing the selected information accepted by said selected information accepting apparatus; (4) an individual list creating apparatus of creating, as an individual list, a list which is a part of the predetermined list and at least includes identification information of data common to the selected information stored in said selected information storing apparatus and the distributable data; and (5) a data distributing apparatus of performing the distribution of the data based on a predetermined request for distribution, said terminal apparatus comprising:
a distribution requesting apparatus of identifying the data of which distribution is desired based on the created individual list, and transmitting the data to the server as the request for distribution.

A forty-fifth invention of the present invention (corresponding to Claim 45) is a terminal apparatus comprising:
terminal means of receiving data distributed through network means; and
reproducing means of reproducing the received data,
wherein said distribution is performed the number of times based on a predetermined criterion as distribution of data including voice data.

A forty-sixth invention of the present invention (corresponding to Claim 46) is a terminal apparatus comprising:
terminal means of receiving data distributed through network means; and
reproducing means of reproducing the received data,
wherein said distribution is performed as distribution of data including data other than music data as voice data.

A forty-seventh invention of the present invention (corresponding to Claim 47) is a data reproducing terminal apparatus of reproducing data distributed from a server of performing data distribution the number of times based on a predetermined criterion, said data reproducing terminal apparatus comprising:
a reproducing apparatus of reproducing at least a principal part of distributable data, the voice data distributed as voice data from said server through the network based on (1) a request for distribution of data desired by a receiving side and/or (2) the number of times.

A forth0eighth invention of the present invention (corresponding to Claim 48) is a data reproducing terminal apparatus comprising reproducing means of reproducing data distributed from a server comprising: (1) a distribution data storing apparatus of storing data that is to be an object of distribution through a network as distributable data; (2) a selected information accepting apparatus of accepting selected information from a receiving side for selecting identification information of the data being desired by use of a predetermined list; (3) a selected information storing apparatus of storing the selected information accepted by said selected information accepting apparatus; (4) an individual list creating apparatus of creating, as an individual list, a list which is a part of the predetermined list and at least includes identification information of data common to the selected information stored in said selected information storing apparatus and the distributable data; and (5) a data distributing apparatus of performing the data distribution based on a request for distribution of the data of which distribution is desired which data is identified by the receiving side based on the created individual list.

A forty-ninth invention of the present invention (corresponding to Claim 49) is a data reproducing terminal apparatus comprising reproducing means of reproducing data distributed through network means and received,
wherein said distribution is performed the number of times based on a predetermined criterion as distribution of data including voice data.

A fiftieth invention of the present invention (corresponding to Claim 50) is a data reproducing terminal apparatus comprising reproducing means of reproducing data distributed through network means and received,
wherein said distribution is performed as distribution of data including data other than music data as voice data.

A fifty-first invention of the present invention (corresponding to Claim 51) is a program of causing a computer to function as all or part of said apparatuses or means of the present invention according to any of the first to the twenty-eighth inventions and the thirty-first to the fiftieth inventions of the present invention.

A fifty-second invention of the present invention (corresponding to Claim 52) is a program of causing a computer to execute all or part of said steps of the present invention according to the twenty-ninth or the thirtieth invention of the present invention.

A fifty-third invention of the present invention (corresponding to Claim 53) is a medium carrying a program of causing a computer to function as all or part of said apparatuses or means of the present invention according to any of the first to the twenty-eighth inventions and the thirty-first to the fiftieth inventions of the present invention, said medium being characterized by being computer-processable.

A fifty-fourth invention of the present invention (corresponding to Claim 54) is a medium carrying a program of causing a computer to execute all or part of said steps of the present invention according to the twenty-ninth or the thirtieth invention of the present invention, said medium being characterized by being computer-processable.

### BRIEF DESCRIPTION OF DRAWINGS

FIG. 1 is a block diagram showing the structure of a voice information distributing system of a first embodiment of the present invention;
FIG. 2 is a view showing an example of a distribution information list according to the first embodiment of the present invention which list includes CM character information;
FIG. 3 is a view showing an example of the distribution information list according to the first embodiment of the present invention which list includes location information indicating the location of a list distributing apparatus;
FIG. 4 is a view showing an example of the distribution information list according to the first embodiment of the present invention which list includes location information indicating the location of an information distributing apparatus and information indicating CM voice information;
FIG. 5 is a view showing an information reproducing apparatus according to the first embodiment of the present invention;
FIG. 6 is a view showing an information transmitting and receiving apparatus according to the first embodiment of the present invention;
FIG. 7 is a block diagram showing the structure of a voice information distributing system according to a second embodiment of the present invention;
FIG. 8 is a block diagram showing the structure of a voice information distributing system according to a third embodiment of the present invention;
FIG. 9 is a block diagram of assistance in explaining the information and the flow of profits in a voice information distribution service according to a fourth embodiment of the present invention;
FIG. 10 is a block diagram showing the structure of an information distributing system according to a fifth embodiment of the present invention;
FIG. 11 is a block diagram showing another example of the data distributing system of the present invention; and
FIG. 12 is a block diagram showing still another example of the data distributing system of the present invention.

### Explanation of reference numerals

- 101a: Voice information distributing server
- 102a: Network
- 102b: Network
- 103a: Information providing apparatus
- 103b: Information providing apparatus
- 104a: Information transmitting and receiving apparatus
- 104b: Information transmitting and receiving apparatus
- 104c: Information transmitting and receiving apparatus
- 105a: Information reproducing apparatus
- 105b: Information reproducing apparatus
- 105c: Information reproducing apparatus
- 110: Information storing apparatus
- 111: Information accepting apparatus
- 112: Selected information storing apparatus
- 113: Selected information accepting apparatus
- 114a: Distribution information storing apparatus
- 115a: List distributing apparatus
- 116a: Information distributing apparatus

### BEST MODE FOR CARRYING OUT THE INVENTION

### (First Embodiment)

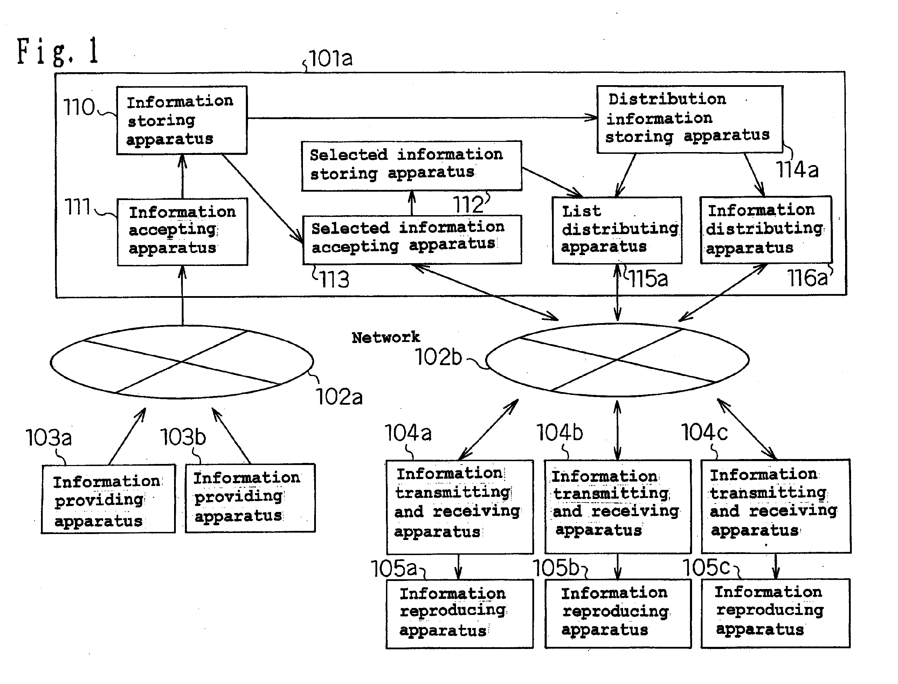

First, the structure of a voice information distributing system of the first embodiment of the present invention will be described with reference to FIG. 1 which is a structural view of the voice information distributing system of the present embodiment. The voice information distributing system of the present embodiment is a system of performing distribution through a network the number of times based on a predetermined criterion.

In FIG. 1, reference numeral 101a represents a server of a service provider of a voice information distribution service constituting the information distributing system of the first embodiment. Reference numerals 103a and 103b represent information providing apparatuses of providing voice information. Reference numeral 102a represents a network of enabling communication between the information providing apparatuses 103a and 103b and the server 101a. Reference numeral 111 represents an information accepting apparatus of accepting voice information provided through the network 102a. Reference numeral 110 represents an information storing apparatus of storing the voice information accepted by the information accepting apparatus 111. Reference numeral 114a represents a distribution information storing apparatus of copying and storing, of the voice information stored in the information storing apparatus 110, distributable voice information. Reference numeral 113 represents a selected information accepting apparatus of presenting a list of the voice information stored in the information storing apparatus 110 to the user, making the user to make a selection from the list and accepting the selected information. Reference numeral 112 represents a selected information storing apparatus of storing the selected information accepted by the selected information accepting apparatus 113. Reference numeral 115a represents a list distributing apparatus of creating a distribution information list based on the selected information stored in the selected information storing apparatus 112 and the distributable voice information stored in the distribution information storing apparatus 114a, and distributing the list. Reference numeral 116a represents an information distributing apparatus of reading out and distributing the voice information stored in the distribution information storing apparatus 114a. Reference numerals 104a, 104b and 104c represent information transmitting and receiving apparatuses of transmitting the selected information to the selected information accepting apparatus 113, and receiving voice information from the information distributing apparatus 116a based on the distribution information list received from the list distributing apparatus 115a. Reference numeral 102b represents a network of enabling communication between the information transmitting and receiving apparatuses 104a, 104b and 104c and the server 101a. Reference numerals 105a, 105b and 105c represent information reproducing apparatuses of reproducing the voice information stored in the information transmitting and receiving apparatuses 104a, 104b and 104c.

The information transmitting and receiving apparatuses 104a, 104b and 104c correspond to the information obtaining apparatus and the means including the distribution requesting apparatus of the present invention, the information reproducing apparatuses 105a, 105b and 105c correspond to the reproducing apparatus of the present invention, and the list distributing apparatus 115a corresponds to the individual list distributing apparatus of the present invention. Moreover, the list of the present embodiment corresponds to the full list of the present invention, and the distribution information list of the present embodiment corresponds to the individual list of the present invention.

Next, the operation of the voice information distributing system according to the first embodiment will be described. In the voice information distributing system according to the first embodiment, first, a voice data file which is the substantial data of the voice information is created by at least one information provider. As concrete contents of the voice information, for example, the following are considered: news; music such as latest hit songs; English conversation lessons; radio novels; fortunetelling voices; voice diaries; voice columns on hobbies or products. These pieces of voice information are distributed the number of times based on a predetermined criterion. For example, when desiring to regularly view and listen to daily news, by making once a contract for viewing and listening, the user can receive the distribution of the daily news every day thereafter. However, when distribution is not always regularly performed such as in the case of the distribution of voice columns on products, it is naturally impossible to receive a new distribution unless the information provider updates the voice information. Moreover, there can be cases where it is known from the beginning that the number of times of distribution is one.

These voice data files and additional information such as the title, the author and the genre relating to the voice are transmitted to the server 101a through the network 102a by the information providing apparatuses 103a and 103b. The network 102a is, specifically, the Internet or the like, and the information providing apparatuses 103a and 103b are personal computers or the like connectable to the Internet. To transmit voice data files and additional information, file transmitting means is used such as HTTP (hyper text transfer protocol), FTP (file transfer protocol) or file attachment to electronic mail messages.

The information accepting apparatus 111 of the server 101a stores the received voice data file and additional information into the information storing apparatus 110. The information storing apparatus 110 is, specifically, a disk server or the like.

The selected information accepting apparatus 113 presents, on the information transmitting and receiving apparatuses 104a, 104b and 104c through the network 102b, a list where the voice data files stored in the information storing apparatus 110 are classified according to genre, author or the like based on the additional information and the result of the classification is edited so as to be easy to view for the user.

The selected information accepting apparatus 113 is, specifically, a Web server (WWW server) or the like, the network 102b is, specifically, the Internet or the like, and the information transmitting and receiving apparatuses 104a, 104b and 104c are, specifically, personal computers or the like that connect to the Internet and can access Web servers or the like.

The user can freely select voice information of which distribution is desired by him or her, from the list of voice information presented on the information transmitting and receiving apparatuses 104a, 104b and 104c. The result of the selection is returned to the selected information accepting apparatus 113 through the network 102b, and the selected information is stored into the selected information storing apparatus 112.

By using such a list, the user can freely select online voice information of which distribution is desired by him or her.

The voice data file and the additional information stored in the information storing apparatus 110 are copied to the distribution information storing apparatus 114a at the point of time when becoming distributable to the user by the service provider checking that the data contents have no problem with distribution. The distribution information storing apparatus 114a is, specifically, a disk server or the like.

When the voice information represented by each user's selected information stored in the selected information storing apparatus 112 and the voice information of the additional information stored in the distribution information storing apparatus 114a coincide with each other, the list distributing apparatus 115a makes the coinciding voice information distributable from the information distributing apparatus to the user's information transmitting and receiving apparatus, and a distribution information list is made creatable that contains the additional information of the distributable voice information and comprises codes enabling identification of the corresponding voice data.

Thereafter, when the user accesses the list distributing apparatus 115a from the information transmitting and receiving apparatuses 104a, 104b and 104c, the list distributing apparatus 115a checks whether the distribution information list is creatable or not, and when it is creatable, the list distributing apparatus 115a distributes the distribution information list to the information transmitting and receiving apparatuses 104a, 104b and 104c. The information transmitting and receiving apparatuses 104a, 104b and 104c having received the distribution information list successively request the information distributing apparatus 116a to distribute the voice data files identified by the received distribution information list.

By using such a distribution information list, the user can freely download voice information that is made distributable, irrespective of time and place. Moreover, since the distribution information list is created when the list distributing apparatus is accessed, the user can obtain the latest distribution information list. Consequently, for example, when distribution of music such as a latest hit song is desired, whether the distribution is possible or not can be found only by accessing the list distributing apparatus.

The information distributing apparatus 116a reads out from the distribution information storing apparatus 114a the voice data file of which distribution is requested by the information transmitting and receiving apparatuses 104a, 104b and 104c, and transmits it to the information transmitting and receiving apparatuses 104a, 104b and 104c by use of the file transmitting means such as HTTP, FTP or file attachment to electronic mail messages.

The information transmitting and receiving apparatuses 104a, 104b and 104c store the received voice data file. The user can reproduce the voice data file stored in the information transmitting and receiving apparatuses 104a, 104b and 104c by use of the information reproducing apparatuses 105a, 105b and 105c.

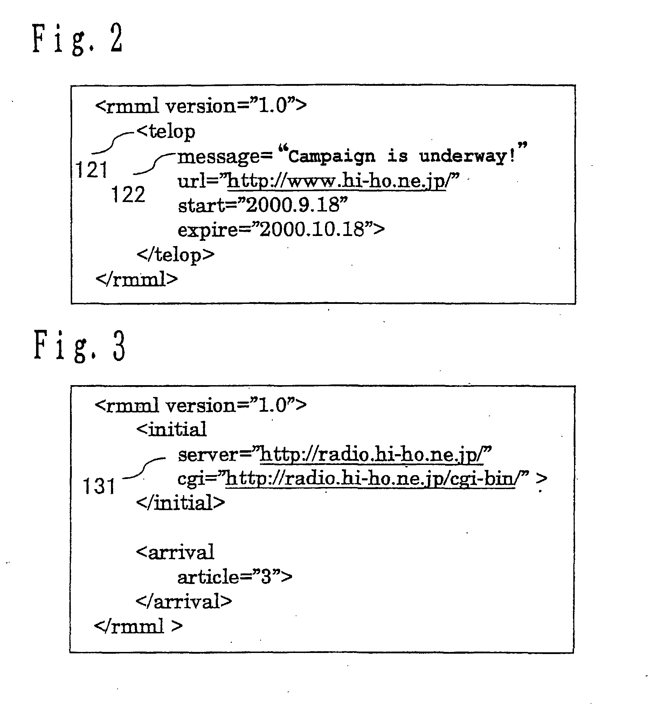

Now, three examples of the above-described distribution information list will be described one by one with reference to FIGs. 2 to 4.

FIG. 2 is a view showing an example of the distribution information list according to the first embodiment of the present invention which list includes CM character information. In FIG. 2, reference numeral 121 represents a "telop" tag indicating that the contents are CM character information (telop information). Reference numeral 122 represents a "message" attribute indicating the CM character contents to be displayed.

The list distributing apparatus 115a inserts the "telop" tag 121 into the distribution information list on an instruction of the voice information distribution service provider. The information transmitting and receiving apparatuses 104a, 104b and 104c interpret the "telop" tag 121 and the "message" attribute 122, and display it on the display portion.

FIG. 3 is a view showing an example of the distribution information list according to the first embodiment of the present invention which list includes location information indicating the location of the list distributing apparatus. In FIG. 3, reference numeral 131 represents a "server" attribute which is a URL (uniform resource locator) indicating the location of the list distributing apparatus on the Internet.

The list distributing apparatus 115a shows the URL specified by the voice information distribution service provider in the "server" attribute 131 of the distribution information list. The information transmitting and receiving apparatuses 104a, 104b and 104c interpret the "server" attribute 131, and the next and succeeding accesses to the list distribution apparatus are made to the list distributing apparatus shown in the "server" attribute 131.

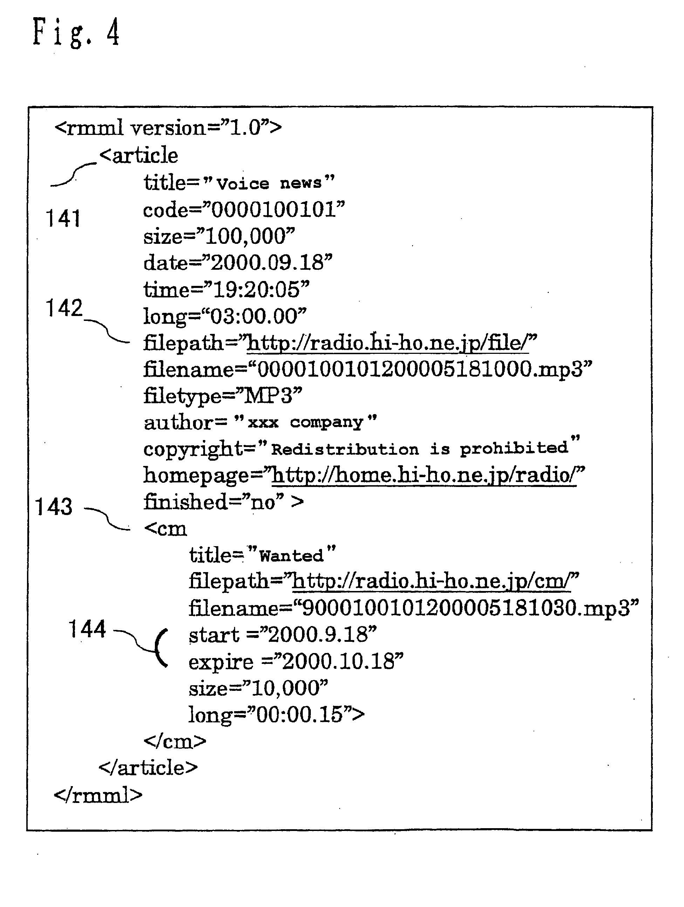

FIG. 4 is a view showing an example of the distribution information list according to the first embodiment of the present invention which list includes location information indicating the location of the information distributing apparatus and information indicating CM voice information. In FIG. 4, reference numeral 141 represents an "article" tag indicating that the contents are voice information. Reference numeral 142 represents a "filepath" attribute which is a URL indicating the location on the Internet of the information distributing apparatus of distributing the voice data file. Reference numeral 143 represents a "cm" tag indicating that the contents are CM voice information. Reference numeral 144 represents a "start" attribute and an "expire" attribute indicating the start date and the expiration date of the period for which the CM voice information is valid, respectively.

When voice information distributable to the information transmitting and receiving apparatuses is generated, the list distributing apparatus 115a adds the "article" tag 141 indicating the corresponding voice information to the distribution information list. When this is done, the URL of the information distributing apparatus of distributing the voice data file of the corresponding voice information is written into the "filepath" attribute 142. The list distributing apparatus 115a adds the "cm" tag 143 associated with the "article" tag of the distribution information list on an instruction of the voice information distribution service provider. To the "cm" tag 143, the "start" and the "expire" attributes 144 indicating the start date and the expiration date of the period for which the CM voice information is valid are added as required as well as the location information indicating the location of the CM voice information.

The information transmitting and receiving apparatuses 104a, 104b and 104c interpret the "article" tag 141, receive voice information from the information distributing apparatus indicated by the "filepath" attribute 142, and store the received voice information. In doing so, when the "cm" tag 143 is associated, the information transmitting and receiving apparatuses 104a, 104b and 104c receive CM voice information based on the location information indicating the location of the CM voice information, and store the received CM voice information.

When the voice information stored in the information transmitting and receiving apparatuses 104a, 104b and 104c is reproduced by the information reproducing apparatuses 105a, 105b and 105c, the CM voice information is passed to the information reproducing apparatuses 105a, 105b and 105c together with the voice information if the "cm" tag 143 is associated and the period of validity indicated by the "start" and the "expire" attributes 144 has not expired.

On the other hand, at the information transmitting and receiving apparatuses 104a, 104b and 104c, when the voice data file shown in the distribution information list is received and storage of the file is completed, of the information on the received distribution information list, only the location information (that is, the "filepath" attribute 142) indicating the location of the voice data file is replaced from the information distributing apparatus to the information transmitting and receiving apparatuses and stored. Specifically, a replacement with address information of the area where the file is stored is made. This enables the received distribution information list to be effectively used as a list for reproduction (play list).

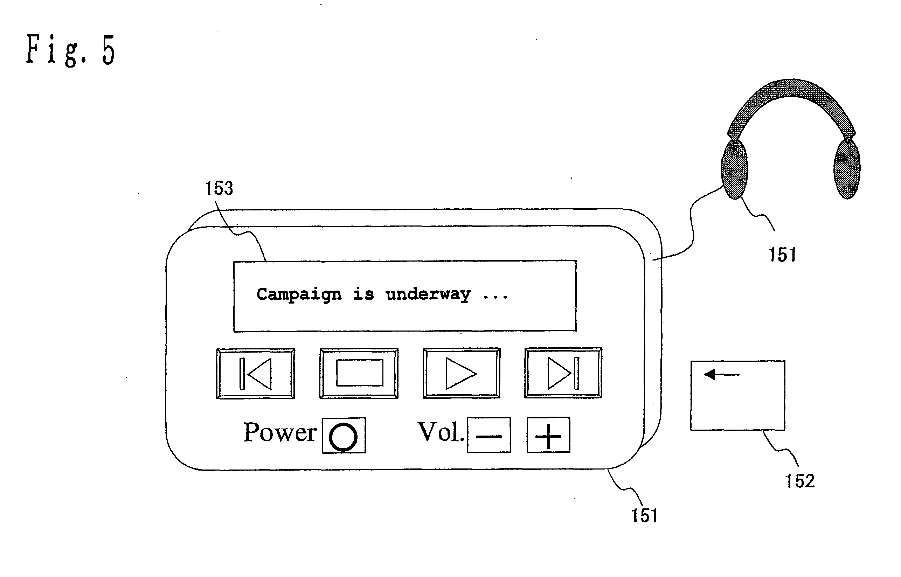

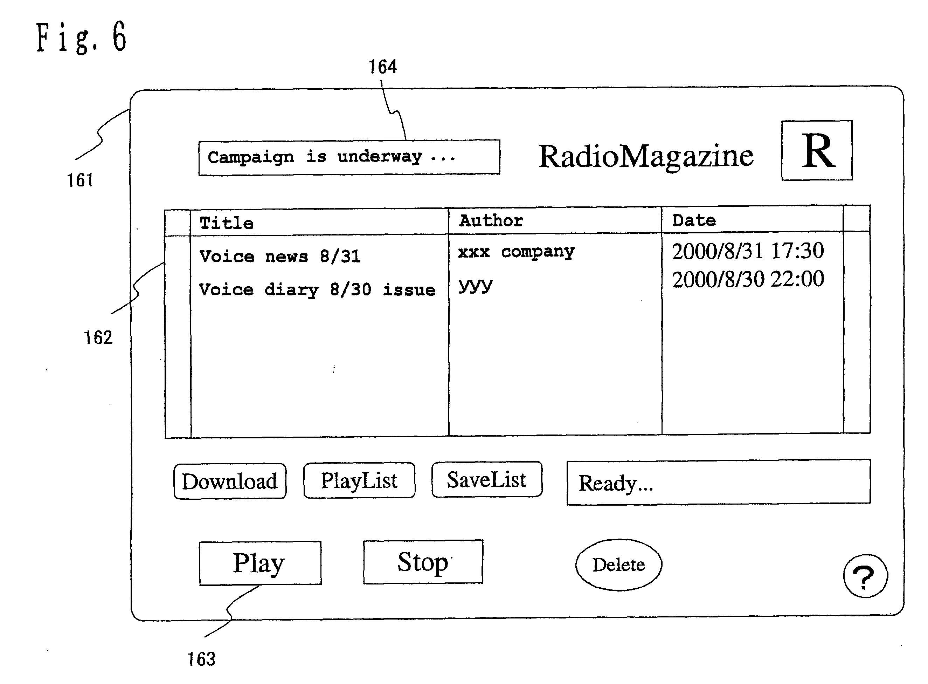

Next, two examples associated with reproduction of the voice data file of which storage is completed will be described one by one with reference to FIGs. 5 and 6.

FIG. 5 is a view showing the information reproducing apparatus according to the first embodiment of the present invention. In FIG. 5, reference numeral 151 represents a portable music player. Reference numeral 152 represents a memory card of storing the voice information stored by the information transmitting and receiving apparatus so that the voice information is captured into the portable music player 151. Reference numeral 153 represents a display portion of displaying the artist name, the song name and the like on the portable music player.

With MP3 and the like which are voice data compression formats, it is possible to incorporate ID information such as the title and the author of the voice data in the compressed files.

Therefore, by incorporating the CM character information or the like written in the distribution information list into part of the voice data file when the voice data file received by the information transmitting and receiving apparatuses 104a, 104b and 104c are stored, CM character information can be displayed on the display portion 153 of the portable music player 151, so that the advertising effectiveness of the CM character information can be enhanced.

FIG. 6 is a view showing the information transmitting and receiving apparatus according to the first embodiment of the present invention. In FIG. 6, reference numeral 161 represents a display screen of an information transmitting and receiving software program executable on a personal computer. Reference numeral 162 represents a list box of presenting the additional information of the received voice information to the user. Reference numeral 163 represents a reproduction button of instructing the information reproducing apparatus to reproduce the voice data file of the voice information selected in the list box 162. Reference numeral 164 represents a display portion of displaying CM character information (telop information).

According to the information transmitting and receiving software program 161, when the reproduction button 163 is operated, the voice data file of the voice information selected in the list box 162 is passed to a music file reproducing software program, and reproduction of the voice is started. Since CM character information is simultaneously displayed on the display portion 164 at this time, the user can view the CM character information displayed on the screen at the same time while listening to the voice on the personal computer, so that the advertising effectiveness of the CM character information can be enhanced.

While the networks 102a and 102b are the Internet in the above-described embodiment, they may be the public switched telephone network, the mobile telephone network, a LAN (local area network) or the like.

While the information providing apparatuses 103a and 103b are personal computers connectable to the Internet, they may be mobile telephones, personal digital assistants having a network connection function, or the like.

Moreover, the information reproducing apparatuses 105a, 105b and 105c may be provided with a voice recognizing circuit so that, when the voice data file stored in the information transmitting and receiving apparatuses 104a, 104b and 104c is reproduced, the voice to be reproduced is recognized and converted into character information and the character information is displayed. For example, (1) when the voice data file is an instrumental, the score thereof may be displayed, and (1) when the voice data file is a song, the lyrics thereof may be displayed.

Moreover, by the information reproducing apparatuses 105a, 105b and 105c being provided with a voice synthesizing circuit so that the character information written in the distribution information list is reproduced by being read out by voice when the voice data file stored in the information transmitting and receiving apparatuses 104a, 104b and 104c is reproduced, voice information can be effectively reproduced from character information having a small amount of data compared to voice information.

Moreover, by the information reproducing apparatuses 105a, 105b and 105c being provided with a voice mixing circuit so that another voice data file is reproduced at the same time when the voice data file stored in the information transmitting and receiving apparatuses 104a, 104b and 104c is reproduced, even when the received voice data file is voice data of only human voice, when character information is read out by voice by use of the voice synthesizing circuit, or the like, BGM data can be reproduced with high quality so as to be superimposed on the voice.

Moreover, by the server 101a being provided with means of settling accounts with the users and the list distributing apparatus 115a adding, for the users having made payments, location information indicating the locations of other pieces of fee-charging information to the distribution information list instead of CM voice information on an instruction of the voice information distribution service provider, it is possible to distribute more detailed voice information as fee-charging information for summary voice information, to distribute full chorus music as fee-charging information for the introduction of popular music, to distribute electronic textbook data as fee-charging information for English conversation voice, or the like.

Moreover, by the information provider adding valid region information indicating the regions where the provided voice information is valid to the voice data file as additional information and providing the voice information to the information accepting apparatus 111, by the information transmitting and receiving apparatuses 104a, 104b and 104c used by the users obtaining current location information by use of the GPS, the location information service of the mobile telephone or the PHS, or the like and transmitting the current location information when a request for the distribution information list is made to the list distributing apparatus 115a, and by the list distributing apparatus 115a creating the distribution information list based on the selected information stored in the selected information storing apparatus 112, the distributable voice information stored in the distribution information storing apparatus 114a and the received information on the current location of the information transmitting and receiving apparatus, for example, when the user is walking or driving a car while carrying an information transmitting and receiving apparatus with him or her, distribution can be easily received by extracting information on an area in the neighborhood of the user's current location.

It is to be noted that in the information transmitting and receiving apparatus, the area information may be extracted from the already received and stored voice information by use of the current location information and voice information to which the valid region information matching the current location information is added may be selected at the time of voice information selection at the selected information accepting apparatus 113.

When the addition of the valid region information and the delivery of the current location information are performed, it is also unnecessary that the distribution information list be created based thereon. For example, although the distribution information list itself does not reflect these two pieces of information and the user cannot obtain them from the distribution information list, only information to which the valid region information matching the current location information is added may be distributed in the data distribution by the data distributing apparatus. To sum up, the valid region information indicating the region where distribution is validly performed is added to the data that is to be an object of distribution, the receiving side transmits the current location information indicating the current location where a distribution request is made, together with the distribution request, and the data distribution by the data distributing apparatus is performed based on the attached valid region information and the transmitted current location information.

Moreover, according to the voice information distributing system of the first embodiment, voice distribution information service providers add arbitrary CM character information in addition to the voice information provided by information providers, so that a voice information distributing system capable of display and offering high effectiveness of advertising can be realized.

Moreover, according to the voice information distributing system of the first embodiment, a highly convenient voice information distributing system can be realized where it is unnecessary for the user to tailor the information transmitting and receiving apparatus even when the location of the list distributing apparatus is changed. This is because when the location is scheduled to be changed by the voice distribution information service provider, information for the information transmitting and receiving apparatus to change the list distributing apparatus to which the distribution information list is to be distributed thereafter is added to the distribution information list. By doing this, the user can receive information distribution without being conscious of the change at all. For similar reasons, according to the voice information distributing system of the first embodiment, a highly convenient voice information distributing system can be realized where it is unnecessary for the user to tailor the information transmitting and receiving apparatus even when the locations of the information distributing apparatus and the distribution information storing apparatus are changed.

Moreover, according to the voice information distributing system of the first embodiment, the received distribution information list can be effectively used as a list for reproduction (play list) on the information transmitting and receiving apparatus.

Moreover, according to the voice information distributing system of the first embodiment, a voice information distributing system can be realized where voice distribution information service providers arbitrarily add CM voice information to the voice information provided by information providers and the CM voice information can be reproduced by the information reproducing apparatus.

Moreover, according to the voice information distributing system of the first embodiment, a voice information distributing system can be realized where CM voice information having expired and become meaningless is not reproduced.

As described above, according to the voice information distributing system of the first embodiment, a voice information distributing system can be realized with which the user can enjoy contents comprising voice information of contents desired by him or her.

### (Second Embodiment)

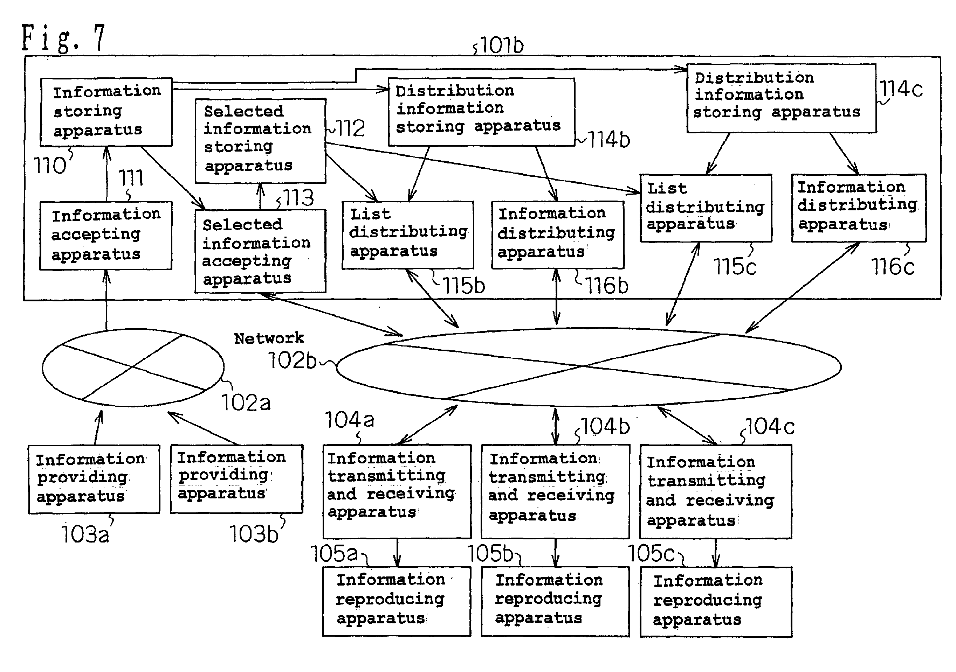

Next, the structure of a voice information distributing system of the present embodiment will be described with reference mainly to FIG. 7. FIG. 7 is a view showing the structure of the voice information distributing system according to the second embodiment of the present invention.

In FIG. 7, elements 102a, 102b, 103a, 103b, 104a, 104b, 104c, 105a, 105b, 105c, and elements 111 and 113 in 101b are similar to those of the voice information distributing system of the first embodiment. Reference numeral 110 represents an information storing apparatus of storing the voice information accepted by the information accepting apparatus 111. Reference numerals 114b and 114c represent a plurality of distribution information storing apparatuses of copying and storing, of the voice information stored in the information storing apparatus 110, distributable voice information. Reference numeral 112 represents a selected information storing apparatus of storing the selected information accepted by the selected information accepting apparatus 113. Reference numerals 115b and 115c represent a plurality of list distributing apparatuses of creating a distribution information list based on the selected information stored in the selected information storing apparatus 112 and the distributable voice information stored in the distribution information storing apparatuses 114b and 114c, and distributing the list. Reference numerals 116b and 116c represent a plurality of information distributing apparatuses of reading out and distributing the voice information stored in the distribution information storing apparatuses 114b and 114c with which they are paired.

Next, of the operation of the voice information distributing system according to the second embodiment, only the part different from the operation of the first embodiment will be described. In the voice information distributing system according to the second embodiment, the voice data file and the additional information stored in the information storing apparatus 110 are copied to both the distribution information storing apparatuses 114b and 114c at the point of time when they become distributable to the user.

When the voice data file and the additional information are copied so that the voice data file and the additional information copied to the distribution information storing apparatus 114b and those copied to the distribution information storing apparatus 114c are completely the same, the information distributing apparatuses 115b and 115c can distribute completely the same voice data files.

That is, since it is possible to arbitrarily specify the location information indicating the location of the information distributing apparatus on the distribution information list, it is possible to specify a pair of the distribution information storing apparatus and the information distributing apparatus at the shortest distance from the user's location on the network, or when the number of users increases and pairs of the distribution information storing apparatus and the information distributing apparatus are newly added, it is possible to perform specification so that an equal load is imposed on the pairs of the distribution information storing apparatus and the information distributing apparatus after the addition. Consequently, the load on the distribution information storing apparatuses, the information distributing apparatuses and the network can be effectively distributed.

When the voice data file and the additional information copied to the distribution information storing apparatuses 114b and 114c are exclusively copied, the information distributing apparatuses 115b and 115c can distribute voice data files exclusive of each other.

That is, by making the location information indicating the location of the information distributing apparatus vary according to the genre, the regionality, the frequency of distribution or the like of the voice information on the distribution information list, the load can be distributed to a plurality of pairs of the distribution information storing apparatus and the information distributing apparatus without the total data amount of each piece of voice information being increased, so that the load on the distribution information storing apparatuses and the information distributing apparatuses can be effectively distributed.

On the other hand, the second embodiment comprises a plurality of list distributing apparatuses 115b and 115c. Since the location information 131 indicating the list distributing apparatus on the distribution information list in FIG. 3 is changeable, when the number of list distributing apparatuses is increased with increase in the number of users, the load on the list distributing apparatuses can be effectively distributed by changing the location information to the one indicating another list distributing apparatus according to the frequency of use, the assigned membership number or the like of the user.

To sum up, the distribution data storing apparatus and the data distributing apparatus of the present invention are each provided in a plural number; of the data stored in the data storing apparatus, distributable data is copied and stored so as to be distributed to the plural distribution data storing apparatuses; the data distributing apparatus and the distribution data storing apparatus have a predetermined correspondence with each other; and the location information may be generated based on the distribution of the distributable data to the plural distribution data storing apparatuses. Moreover, the individual list distributing apparatus of the present invention is provided in a plural number, and information for the data obtaining apparatus to change the individual list distributing apparatus to which the individual list is to be distributed thereafter may be added to the individual list.

As described above, according to the voice information distributing system of the third embodiment, a voice information distributing system can be provided where the load on the system is distributed.

### (Third Embodiment)

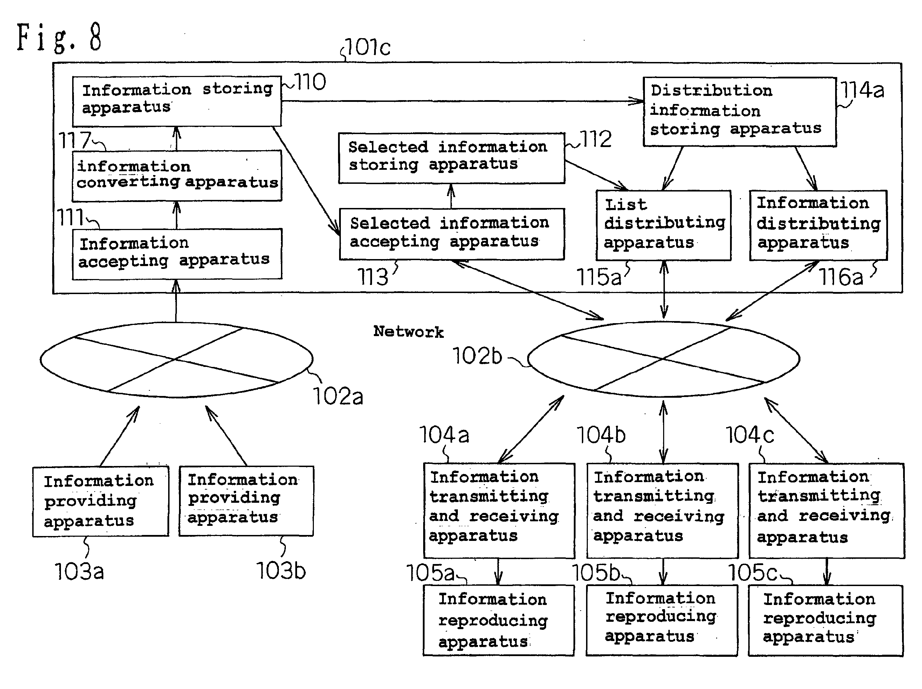

Next, the structure of a voice information distributing system of the present embodiment will be described with reference mainly to FIG. 8. FIG. 8 is a view showing the structure of the voice information distributing system according to the third embodiment of the present invention.

In FIG. 8, a difference from the first embodiment is that an information converting apparatus 117 of enabling conversion of the voice information format is added between the information accepting apparatus 111 and the information storing apparatus 110.

Next, of the operation of the voice information distributing system according to the third embodiment, only the part different from the operation of the first embodiment will be described.

The information accepting apparatus 111 transmits the accepted voice information to the information converting apparatus 117. By the information converting apparatus 117 converting, of the received voice information, voice data from noncompressed data to compressed data and storing the converted data into the information storing apparatus 110, it is unnecessary for the information provider to convert the format of the created voice data file, so that a voice information distributing system capable of easily providing voice information can be realized.

The conversion function of the information converting apparatus 117 is not limited to conversion of the voice data from noncompressed data to compressed data, but may be conversion of compressed data to data of a different compression algorithm.

Moreover, it is assumed that the voice information provided by the information provider is not a voice data file but a voice uttered by the information provider, the information providing apparatuses 103a and 103b are telephones for the fixed telephone network, mobile telephones or the like and the network 102a is the fixed telephone network, the mobile telephone network or the like. At this time, by the information accepting apparatus 111 transmitting the accepted voice to the information converting apparatus 117 and the information converting apparatus 117 converting the received voice into digital voice information and storing it into the information storing apparatus 110, the information provider can easily provide voice information by use of already widespread fixed telephones, mobile telephones and the like.

Moreover, when the voice information provided by the information provider is not a voice data file but a character data file, by the information accepting apparatus 111 transmitting the accepted character data file to the information converting apparatus 117 and the information converting apparatus 117 converting the received character data file into a digital voice data file by use of a voice synthesizing circuit and storing it into the information storing apparatus 110, the information provider can easily provide voice information only by creating a normal character electronic mail message, a word processor-generated document or the like.

Such generation of voice information is not necessarily performed immediately after the acceptance by the information accepting apparatus but may be performed, for example, immediately before the distribution by the information distributing apparatus. To sum up, the data distributing system of the present invention is provided with a data converting apparatus of converting the provided data, and at least a principal part of the data may be distributed as voice data through a network. It is to be noted that the data that is to be an object of distribution may hold, as voice data, the principal part distributed as voice data from the point of time when it is provided by the provider.

As described above, the voice information distributing system according to the third embodiment produces an advantageous effect that a voice information distributing system can be provided with which the load of creating a voice data file and converting the information format can be reduced when the information provider provides voice information.

### (Fourth Embodiment)

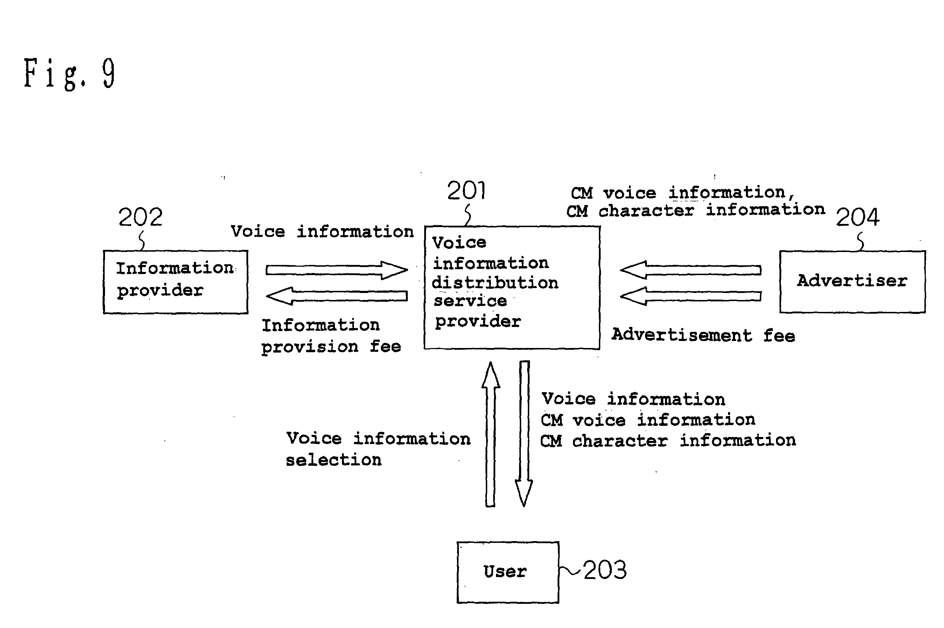

Next, a voice information distribution service of the present embodiment using the data distributing method of the present invention will be described with reference mainly to FIG. 9. FIG. 9 is a view of assistance in explaining the flow of information and the flow of profits in the voice information distribution service according to the fourth embodiment of the present invention.

In FIG. 9, reference numeral 201 represents a service provider of the voice information distribution service, reference numeral 202 represents an information provider providing voice information, reference numeral 204 represents an advertiser providing CM voice information and CM character information, and reference numeral 203 represents a user receiving the voice information, the CM voice information and the CM character information.

In the voice information distribution service according to the fourth embodiment, the voice information distribution service provider 201 provides a voice information distribution service using the voice information distributing system described in any of the first to the third embodiments, receives voice information from the information provider 202 and CM voice information and CM character information from the advertiser, and distributes a combination of the voice information selected, the CM voice information and the CM character information to the user 203. Consequently, the voice information distribution service provider 201 can obtain as a profit an advertisement fee corresponding to the number of distributions of CM information from the advertiser 204.

On the other hand, if the quality of the voice information received from the information provider 202 is high, the number of users 203 selecting the voice information increases, so that the number of opportunities to distribute CM information to the user 203 increases and the voice information distribution service provider 201 can expect increase in the advertisement fee from the advertiser 204. Consequently, the information provider 202 can obtain an information provision fee of high-quality voice information as a profit from the voice information distribution service provider 201.

It is to be noted that the voice information distribution service provider 201 may collect an information usage fee from users and provide such users with additional service.

As described above, the voice information distribution service according to the fourth embodiment produces an advantageous effect that a new information service of providing voice information through the Internet can be realized.

### (Fifth Embodiment)

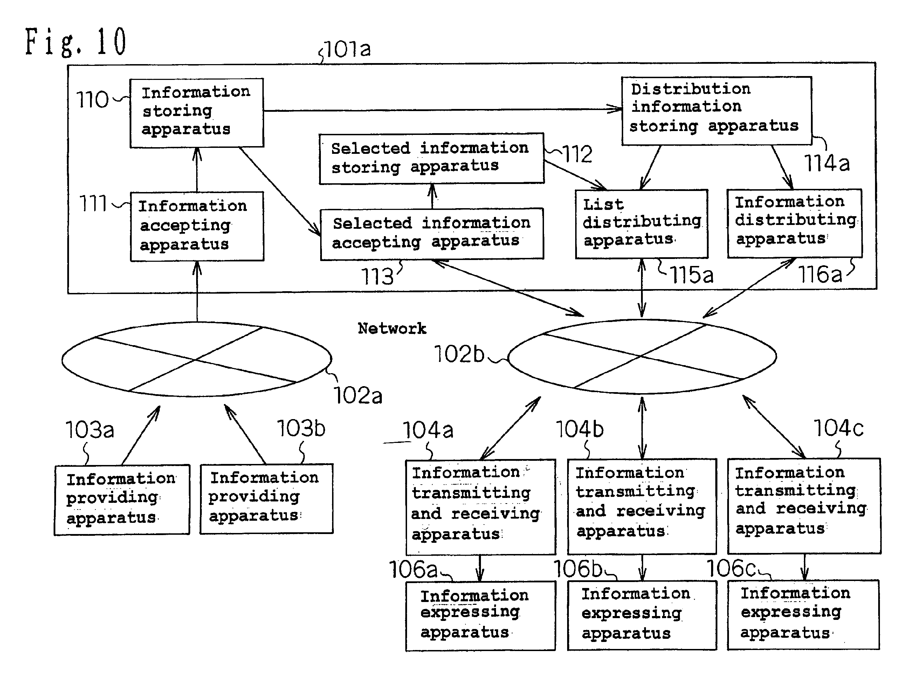

FIG. 10 is a view showing the structure of an information distributing system according to the fifth embodiment of the present invention.

In FIG. 10, elements 102a, 102b, 103a, 103b, 104a, 104b, 104c and 101a are similar to those of the voice information distributing system of FIG. 1. Reference numerals 106a, 106b and 106c represent information expressing apparatuses of appropriately expressing the information stored in the information transmitting and receiving apparatuses 104a, 104b and 104c, respectively.

Next, the operation of the information distributing system according to the fifth embodiment will be described.

In the information distributing system according to the fifth embodiment, first, a data file which is the substantial data of the voice information is created by at least one information providers. Concrete contents of the information include all kinds of information handled on computers or the like such as programs, voices, music, still images, moving images and documents.

The data files of these pieces of information and additional information such as the titles, the authors, the genres and the like relating to the data files are transmitted to the server 101a through the network 102a by the information providing apparatuses 103a and 103b.

The server 101a operates completely similarly to the server of the voice information distributing system of FIG. 1. That is, the server 101a has no concern whether the data file to be processed is voice data or other data.

The information transmitting and receiving apparatuses 104a, 104b and 104c store the received data file. The information transmitting and receiving apparatuses also operate completely similarly to the information transmitting and receiving apparatuses of the voice information distributing system of FIG. 1 because they also have no concern whether the received data file is voice data or other kind of data.

The information expressing apparatuses 106a, 106b and 106c are, for example, music reproducing apparatuses, image display apparatuses, or personal computers incorporating an image display software program, a music reproducing software program, a document display software program or the like, and appropriately express data files according to the kinds of the data files such as (1) performing voice reproduction when the data file stored in the information transmitting and receiving apparatuses 104a, 104b and 104c is voice data, (2) performing still image display when the data file is still image data, (3) performing moving image reproduction when the data file is moving image data, and (4) performing document display when the data file is document data. This enables the user to receive even distribution of large-scale 'information such as programs, voices, music, still images and moving images and use the information. It is to be noted that the software program required by the user such as the above-mentioned image display software program, voice reproducing software program or document display software program may be provided from the service provider to the user online or by mail for pay or for free.

Moreover, by the information provider adding, as additional information at the time of information provision, information identifying the user to which information is distributed such as the membership number and by the user selecting, as information of which distribution is desired by him or her, information identifying the user himself or herself as the user to which the information is distributed, large-scale information can be distributed and exchanged peer-to-peer like the exchange of electronic mail messages from an individual to an individual.

As described above, the information distributing system of the fifth embodiment produces an advantageous effect that an information distributing system enabling distribution of large-scale information can be provided.

As is apparent from the above description, the present invention is, for example, a voice information distributing system of individually distributing voice information to at least one user based on selected information indicating at least one piece of voice information individually selected by the user from among at least one piece of voice information provided by at least one information provider through a network, said voice information distributing system comprising: an information providing apparatus of providing voice information; an information accepting apparatus of accepting the voice information provided by the information providing apparatus; an accepted information storing apparatus of storing the voice information accepted by the information accepting apparatus; a selected information accepting apparatus of presenting to the user a list of voice information stored in the information storing apparatus, making the user to make a selection, and accepting the information selected by the user; a selected information storing apparatus of storing the selected information accepted by the selected information accepting apparatus; a distribution information storing apparatus of copying and storing, of the voice information stored in the accepted information storing apparatus, distributable voice information; a list distributing apparatus of distributing a distribution information list created based on the selected information stored in the selected information storing apparatus and the distributable voice information stored in the distribution information storing apparatus; an information distributing apparatus of distributing the distributable voice information stored in the distribution information storing apparatus; an information transmitting and receiving apparatus of transmitting the selected information to the selected information accepting apparatus through the network, receiving the voice information from the information distributing apparatus based on the distribution information list received from the list distributing apparatus, and storing the received voice information; and an information reproducing apparatus of reproducing the voice information received and stored by the information transmitting and receiving apparatus.

Moreover, the present invention is, for example, such that in the voice information distributing system of the present invention, the list distributing apparatus is capable of creating a distribution information list containing selected information indicating information other than the voice information indicated by the selected information stored in the selected information storing apparatus.

Moreover, the present invention is, for example, such that in the voice information distributing system of the present invention, the list distributing apparatus distributes to the information transmitting and receiving apparatus a distribution information list containing location information indicating the location of the information distributing apparatus, and the information transmitting and receiving apparatus receives voice information from the information distributing apparatus indicated by the location information contained in the received distribution information list and stores the received voice information.

Moreover, the present invention is, for example, such that in the voice information distributing system of the present invention, the information transmitting and receiving apparatus receives voice information from the information distributing apparatus indicated by the location information contained in the received distribution information list and stores the received voice information, the location information contained in the distribution information list is replaced from the information distributing apparatus to the information transmitting and receiving apparatus and stored, and the information reproducing apparatus reproduces the voice information stored in the information transmitting and receiving apparatus which voice information is indicated by the distribution information list, after the replacement of the location information, stored in the information transmitting and receiving apparatus.

Moreover, the present invention is, for example, such that in the voice information distributing system of the present invention, the information transmitting and receiving apparatus adds the information contained in the distribution information list to the voice information received from the information distributing apparatus, and stores the voice information.

Moreover, the present invention is, for example, such that in the voice information distributing system of the present invention, the information transmitting and receiving apparatus is capable of expressing the information contained in the distribution information list.

Moreover, the present invention is, for example, such that in the voice information distributing system of the present invention, the distribution information storing apparatus and the information distributing apparatus comprise a plurality of pairs; of the voice information stored in the accepted information storing apparatus, the distributable voice information is stored so as to be distributed to the plural distribution information storing apparatuses; and the distribution information list contains the location information of the information distributing apparatuses paired with the plural distribution information storing apparatuses in which the voice information is stored so as to be distributed.

Moreover, the present invention is, for example, such that in the voice information distributing system of the present invention, the list distribution apparatus comprises a plurality of list distribution apparatuses, and the information transmitting and receiving apparatus can be instructed to receive the distribution information list from another list distributing apparatus.

Moreover, the present invention is, for example, such that in the voice information distributing system of the present invention, the distribution information list contains expiration date information of the voice information, and the information reproducing apparatus reproduces only voice information of which expiration date coincides with that indicated by the expiration date information.

Moreover, the present invention is, for example, such that in the voice information distributing system of the present invention, the information reproducing apparatus is capable of reproducing the voice information stored in the information transmitting and receiving apparatus after converting it to a different information format.

Moreover, the present invention is, for example, such that in the voice information distributing system of the present invention, the information accepting apparatus is capable of converting the voice information provided by the information providing apparatus to an information format storable in the information storing apparatus.

Moreover, the present invention is, for example, such that in the voice information distributing system of the present invention, the network is the Internet, the information providing apparatus is a personal computer connected to the Internet and incorporating a software program of transmitting voice information to the information accepting apparatus, the information accepting apparatus and the selected information accepting apparatus are WWW servers connected to the Internet, the list distributing apparatus and the information distributing apparatus are file servers connected to the Internet, the information transmitting and receiving apparatus is a personal computer connected to the Internet and incorporating a software program of receiving files from the file servers, and the information reproducing apparatus is a personal computer incorporating a voice information reproducing software program.

Moreover, the present invention is, for example, a voice information distribution service using the voice information distributing system of the present invention in which selection information indicating CM voice information, and CM character information are contained in the distribution information list, and by the distribution information list being distributed to the user by the list distributing apparatus, the service provider of the voice information distribution service obtains an advertisement fee from the advertiser of the CM voice information and the CM character information as an income.

Moreover, the present invention is, for example, a voice information distribution service using the voice information distributing system of the present invention in which with respect to the voice information provided by the information provider, the information provider obtains an information provision fee from the service provider of the voice information service as an income in accordance with the number of, of the pieces of selected information of all the users accepted by the selected information accepting apparatus, the pieces of selected information indicating the voice information.

Moreover, the present invention is, for example, a voice information distributing system of individually distributing information to at least one user based on selected information indicating at least one piece of information individually selected by the user from among at least one piece of information provided by at least one information provider through a network, said voice information distributing system comprising: an information providing apparatus of providing information; an information accepting apparatus of accepting the information provided by the information providing apparatus; an accepted information storing apparatus of storing the information accepted by the information accepting apparatus; a selected information accepting apparatus of presenting to the user a list of information stored in the information storing apparatus, making the user make a selection, and accepting the information selected by the user; a selected information storing apparatus of storing the selected information accepted by the selected information accepting apparatus; a distribution information storing apparatus of copying and storing, of the information stored in the accepted information storing apparatus, distributable information; a list distributing apparatus of distributing a distribution information list created based on the selected information stored in the selected information storing apparatus and the distributable information stored in the distribution information storing apparatus; an information distributing apparatus of distributing the distributable information stored in the distribution information storing apparatus; an information transmitting and receiving apparatus of transmitting the selected information to the selected information accepting apparatus through the network, receiving the information from the information distributing apparatus based on the distribution information list received from the list distributing apparatus, and storing the received information; and an information expressing apparatus of expressing the information received and stored by the information transmitting and receiving apparatus.

Moreover, the present invention is, for example, such that in the information distributing system of the present invention, the network is the Internet, the information providing apparatus is a personal computer connected to the Internet and incorporating a software program of transmitting information to the information accepting apparatus, the information accepting apparatus and the selected information accepting apparatus are WWW servers connected to the Internet, the list distributing apparatus and the information distributing apparatus are file servers connected to the Internet, the information transmitting and receiving apparatus is a personal computer connected to the Internet and incorporating a software program of receiving files from the file servers, and the information expressing apparatus is a personal computer incorporating an information expressing software program.

In the information distributing system of the present invention, in the above-described first to third embodiments, the individual list and the full list of the present invention are distributed to the receiving side through the network and both of the lists are used. However, the present invention is not limited thereto; the information distributing system of the present invention may have a structure such that neither or only one of these two lists is transmitted through the network unlike the above-described structure (the following cases are included: a case where the object of distribution corresponding to the individual list is, for example, delivered to the receiving side by mail; and a case where the object of distribution corresponding to the full list is delivered to the receiving side as an advertising leaflet inserted in a newspaper) . Further, the information distributing system may have a structure not using at all the objects corresponding to the lists (in this case, the user at the receiving side appropriately determines distribution of what data he or she desires) . As described above, when a list distributed through the network is not used, for example, when the individual list is not used, the individual list distributing apparatus of the present invention is unnecessary.

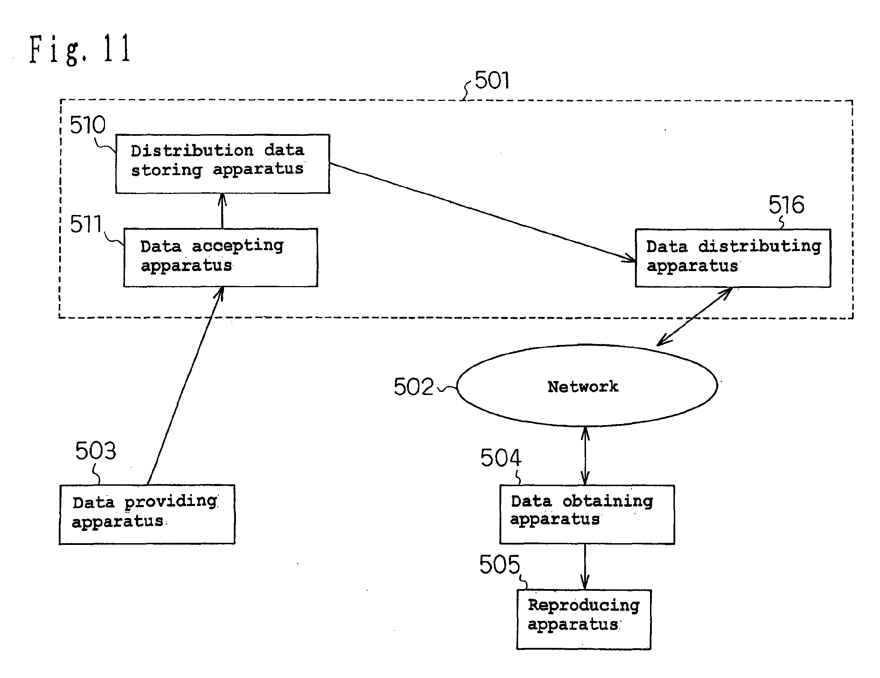

To sum up, the following is also included in the present invention: a data distributing system of performing distribution of data through a network 502 the number of times based on a predetermined criterion as shown in FIG. 11 which is a block diagram as an example of the data distributing system of the present invention, said data distributing system comprising: a data providing apparatus 503 of providing the data that is to be an object of distribution; a data accepting apparatus 511 of accepting the data provided by the data providing apparatus 503; a distribution data storing apparatus 510 of storing, as distributable data, all or part of the data accepted by the data accepting apparatus 511; a data distributing apparatus 516 of distributing, as voice data, at least a principal part of the distributable data through the network 502 based on (1) a request for distribution of data desired by a receiving side and/or (2) the number of times; a data obtaining apparatus 504 of obtaining the data distributed by the data distributing apparatus 516; and a reproducing apparatus 505 of reproducing the voice data obtained by the data obtaining apparatus 504. In FIG. 11, reference numeral 501 represents a server including the data accepting apparatus 511, the distribution data storing apparatus 510 and the data distributing apparatus 516.

However, as mentioned above, for the users, convenience is improved by these lists being used. In particular, (1) when these are regularly sent to the users by electronic mail or the like as optional service, based on the user's request, accompanied by an additional charge and (2) when the list itself is provided as voice information for visually handicapped users, such convenience improvement is remarkable.

Moreover, the full list of the present invention may contain, for example, data that is not distributable at the point of time when the selected information of the present invention is accepted, but can become distributable thereafter. In such a case, the selection of the data of which distribution is desired is (1) a request for distribution of data which is distributable at the point of time when the selection is made or (2) a reservation of distribution of data which can become distributable after the point of time when the selection is made, and the individual list creating apparatus of the present invention may insert the reserved data as the distributable data into the individual list created after the point of time when the reserved data becomes distributable.

Moreover, the individual list of the present invention may be (1) updated based on the request for distribution from the receiving side and distributed to the receiving side or (2) automatically updated based on update of the distributable data and distributed to the receiving side. It is to be noted that, since the former service has the effect of reducing the load on the service provider and the latter service has the effect of increasing the load on the service provider, the latter service may be accompanied by an additional charge to the user.

Moreover, valid region information indicating a region where the distribution is effectively performed may be added to the data that is to be an object of distribution of the present invention. It is to be noted that the receiving side may transmit, together with the request for distribution, current location information indicating the current location where the request for distribution is made and the distribution of the data by the data distributing apparatus may be performed based on the added valid region information and the transmitted current location information.

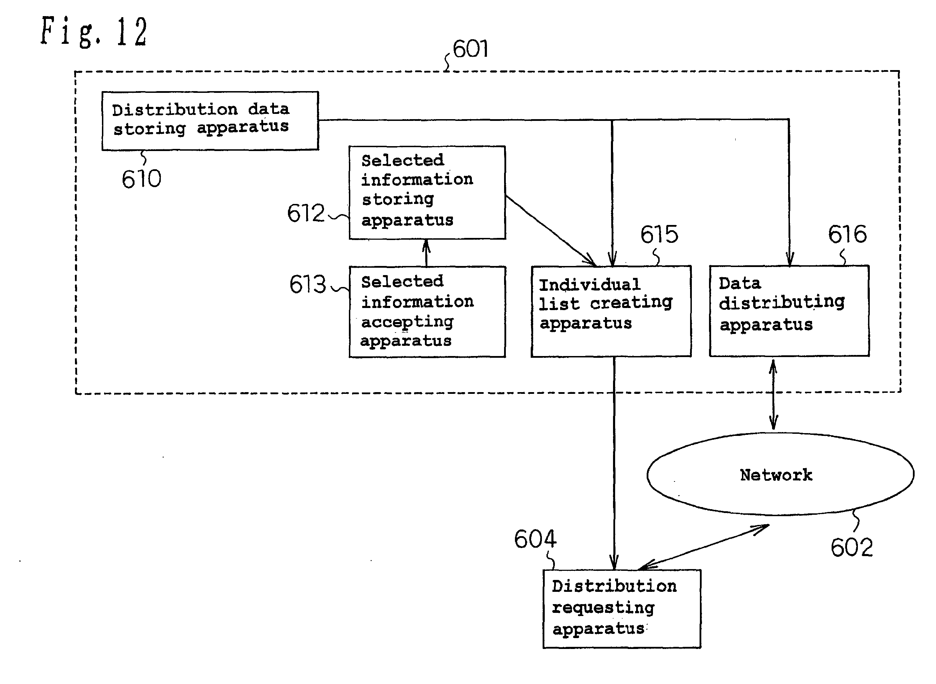

To sum up, the following is also included in the present invention: a data distributing system, as shown in FIG. 12 which is a block diagram of the data distributing system of the present invention, comprising: a distribution data storing apparatus 610 of storing, as distributable data, data that is to be an object of distribution through a network 602 ; a selected information accepting apparatus 613 of accepting selected information, from a receiving side, for selecting identification information of the data being desired by use of a predetermined list; a selected information storing apparatus 612 of storing the selected information accepted by the selected information accepting apparatus 613; an individual list creating apparatus 615 of creating, as an individual list, a list which is a part of the predetermined list and at least includes identification information of data common to the selected information stored in the selected information storing apparatus 612 and the distributable data; a distribution requesting apparatus 604 of identifying data of which distribution is desired based on the created individual list, and transmitting the data from the receiving side as a request for distribution; and a data distributing apparatus 616 of performing distribution of the data based on the request for distribution from the distribution requesting apparatus 604. In FIG. 12, reference numeral 601 represents a server 601 including the distribution data storing apparatus 610, the selected information storing apparatus 612, the selected information accepting apparatus 613, the individual list creating apparatus 615 and the data distributing apparatus 616.

Moreover, in the above-described embodiments, the data distributing apparatus of the present invention performs data distribution as download from a server based on a request from the distribution requesting apparatus of the present invention. However, the present invention is not limited thereto; for example, when the data size is not very large, distribution to the user's electronic mail box or the like may be automatically performed by extracting the identification information of data common to the selected information and the distributable data of the present invention. Further, such distribution may be performed with an additional charge as an optional service based on the user's request. To sum up, the data distributing apparatus of the present invention distributes, as voice data, at least a principal part of the distributable data through the network based on (1) a request for distribution of data of which distribution is desired by a receiving side and/or (2) the number of times based on a predetermined criterion. The latter data distributing apparatus is, for example, a data distributing system comprising a distribution data identification information accepting apparatus of accepting, through the network, distribution data identification information, from the receiving side, for identifying identification information of the desired data by use of a predetermined list, characterized in that data that is to be an object of distribution is extracted from the stored distributable data based on the accepted distribution data identification information and the extracted data is distributed to the receiving side.

Moreover, in the above-described first to third embodiments of the present invention, the distribution of the present invention is distribution of distributable data holding at least a principal part as voice data which distribution is performed the number of times based on a predetermined criterion. However, the distribution of the present invention may be , for example, distribution of data including data other than music data as voice data which distribution is not always performed the number of times based on the predetermined criterion. The data, other than music data, of the present invention includes, for example, human voices, animal's cries, and sounds that occur in nature such as the sound of wind and the sound of wave.

Moreover, in the above-described first to third embodiments, the data distributing system of the present invention performs distribution of distributable data holding at least a principal part as voice data. However, the data distributing system of the present invention may perform distribution of distributable data holding data other than voice data such as image data based on the individual list of the present invention as described in the fifth embodiment. To sum up, the data distributing system of the present invention may be a data distributing system comprising: a distribution data storing apparatus of storing, as distributable data, all or part of the data provided as data that is to be an object of distribution through a network; a selected information accepting apparatus of accepting selected information from a receiving side for selecting identification information of the data of which distribution is desired by use of a predetermined list; a selected information storing apparatus of storing the selected information accepted by the selected information accepting apparatus; an individual list creating apparatus of creating an individual list which is a part of the predetermined list and at least includes identification information of data common to the selected information stored in the selected information storing apparatus and the distributable data; a distribution requesting apparatus of transmitting distribution of the desired data as a request for distribution from the receiving side based on the created individual list; and a data distributing apparatus of performing data distribution based on the request from the distribution requesting apparatus. By performing distribution of the desired data based on the distribution request from the receiving side with reference to the individual list as described above, the user can easily obtain large-scale data such as image data from a predetermined server. While (1) it is difficult to distribute a large-scale file as an attachment to an electronic mail message and (2) it is cumbersome for the user to access a predetermined home page every time to download a desired file as mentioned above, it is said that such a problem has been solved.

Moreover, in the above-described embodiments, the individual list distributing apparatus of the present invention adds CM data for making an advertisement to the individual list, and distributes the individual list to the data obtaining apparatus. However, the present invention is not limited thereto; the individual list distributing apparatus of the present invention does not necessarily add CM data. However, since the service provider can obtain an advertisement fee corresponding to the number of distributions of CM data from the advertiser as a profit, by adding CM data, the operation of the system can be smoothed by stabilization of income and expenditure.

Moreover, in the above-described embodiments, the distributable data of the present invention is data copied to the distribution data storing apparatus after determined to be distributable by being checked by the service provider that the data contents have no problem with distribution. However, the present invention is not limited thereto; the distributable data of the present invention may be, for example, data determined to be distributable by its date of distribution being checked by use of a timer or the like when a plurality of pieces of data each having its date of distribution specified is simultaneously provided by the information provider. To sum up, the distributable data of the present invention is data determined to be distributable based on a predetermined criterion.

In the above description, a data distributing system for the service provider to distribute, to the user, data provided by the information provider is described. The data distributing apparatus of the present invention on the side of the service provider may be, for example, a data distributing apparatus comprising: storing means of storing data; and distributing means of distributing data stored in the storing means to the user's terminal through the network, characterized in that the distribution is performed the number of times based on a predetermined criterion as distribution of data including voice data.

To sum up, the following is also included in the present invention: a data distributing system comprising: storing means (for example, the distribution data storing apparatus 510 in FIG. 11) of storing data; distributing means (for example, the data distributing apparatus 516 in FIG. 11) of distributing data stored in the storing means; network means (for example, the network 502 in FIG. 11) of performing the distribution of the data by the distributing means; and terminal means (for example, the data obtaining apparatus 504 in FIG. 11) of receiving data distributed through the network means, characterized in that the distribution is performed the number of times based on a predetermined criterion as distribution of data including voice data. It is to be noted that the following is included in the present invention: a data distributing apparatus comprising: storing means (for example, the distribution data storing apparatus 510 in FIG. 11) of storing data; distributing means (for example, the data distributing apparatus 516 in FIG. 11) of distributing data stored in the storing means to the user's terminal (for example, the data obtaining apparatus 504 in FIG. 11) through a network (for example, the network 502 in FIG. 11), characterized in that the distribution is performed the number of times based on a predetermined criterion as distribution of data including voice data.

Moreover, the following is also included in the present invention: a data distributing system comprising: storing means (for example, the distribution data storing apparatus 510 in FIG. 11) of storing data; distributing means (for example, the data distributing apparatus 516 in FIG. 11) of distributing data stored in the storing means; network means (for example, the network 502 in FIG. 11) of performing the distribution of the data by the distributing means; and terminal means (for example, the data obtaining apparatus 504 in FIG. 11) of receiving data distributed through the network means, characterized in that the distribution is performed as distribution of data including data other than music data as voice data. It is to be noted that the following is included in the present invention: a data distributing apparatus comprising: storing means (for example, the distribution data storing apparatus 510 in FIG. 11) of storing data; distributing means (for example, the data distributing apparatus 516 in FIG. 11) of distributing data stored in the storing means to the user's terminal (terminal means: for example, the data obtaining apparatus 504 in FIG. 11) through a network, characterized in that the distribution is performed as distribution of data including data other than music data as voice data.

Moreover, while the data distributing system is described in the above-described embodiments, the present invention is not limited thereto; for example, a server used therefor is included in an example of the server of the present invention. The present invention in this case is, for example, a server (see the server 501 in FIG. 11) of performing distribution of data through a network the number of times based on a predetermined criterion, said server comprising:
a data accepting apparatus of accepting provision of the data that is to be an object of distribution;
a distribution data storing apparatus of storing, as distributable data, all or part of the data accepted by the data accepting apparatus; and
a data distributing apparatus of distributing, as voice data, at least a principal part of the distributable data through the network based on (1) a request for distribution of data desired by a receiving side and/or (2) the number of times.

Moreover, while the data distributing system is described in the above-described embodiments, the present invention is not limited thereto; for example, a server used therefor is included in an example of the server of the present invention. The present invention in this case is, for example, a server (see the server 601 in FIG. 12) comprising: a distribution data storing apparatus of storing, as distributable data, data that is to be an object of distribution through a network;
a selected information accepting apparatus of accepting selected information, from a receiving side, for selecting identification information of the data being desired by use of a predetermined list;
a selected information storing apparatus of storing the selected information accepted by the selected information accepting apparatus;
an individual list creating apparatus of creating, as an individual list, a list which is a part of the predetermined list and at least includes identification information of data common to the selected information stored in the selected information storing apparatus and the distributable data; and
a data distributing apparatus of performing distribution of the data based on a request for distribution of the data of which distribution is desired which data is identified by the receiving side based on the created individual list.

Moreover, while the data distributing system is described in the above-described embodiments, the present invention is not limited thereto; for example, a server used therefor is included in an example of the server of the present invention. The present invention in this case is, for example, a server (see 1 in FIG. 11) comprising:
storing means of storing data; and
distributing means of distributing data stored in the storing means,
characterized in that the distribution of the data to a terminal apparatus by the distributing means through network means is performed the number of times based on a predetermined criterion as distribution of data including voice data.

Moreover, while the data distributing system is described in the above-described embodiments, the present invention is not limited thereto; for example, a server used therefor is included in an example of the server of the present invention. The present invention in this case is, for example, a server (see 1 in FIG. 11) comprising:
storing means of storing data; and
distributing means of distributing data including, as voice data, data other than music data and stored in said storing means to a terminal through network means.

Moreover, while the data distributing system is described in the above-described embodiments, the present invention is not limited thereto; for example, a data providing apparatus used therefor is included in an example of the data providing apparatus of the present invention. The present invention in this case is, for example, a data providing apparatus (see 1 in FIG. 11) of providing, through a network, data that is to be an object of distribution, to a server of performing distribution of the data to a terminal the number of times based on a predetermined criterion,
said server comprising:
a data accepting apparatus of accepting the data provided by the data providing apparatus;
a distribution data storing apparatus of storing, as distributable data, all or part of the data accepted by the data accepting apparatus; and
a data distributing apparatus of distributing, as voice data, at least a principal part of the distributable data through the network based on (1) a request for distribution of data desired by a receiving side and/or (2) the number of times.

Moreover, while the data distributing system is described in the above-described embodiments, the present invention is not limited thereto; for example, a data providing apparatus used therefor is included in an example of the data providing apparatus of the present invention. The present invention in this case is, for example, a data providing apparatus (see FIG. 1) of providing, through a network, data that is to be an object of distribution, to a server of performing distribution of the data to a terminal,
said server comprising:
a distribution data storing apparatus of storing, as distributable data, the data that is to be an object of distribution through the network;
a selected information accepting apparatus of accepting selected information from a receiving side for selecting identification information of the data being desired by use of a predetermined list;
a selected information storing apparatus of storing the selected information accepted by the selected information accepting apparatus;
an individual list creating apparatus of creating, as an individual list, a list which is a part of the predetermined list and at least includes identification information of data common to the selected information stored in the selected information storing apparatus and the distributable data; and
a data distributing apparatus of performing the distribution of the data based on a request for distribution of the data of which distribution is desired which data is identified by the receiving side based on the created individual list.

Moreover, while in the above-described embodiments, for example, a case is described where as apparatuses at the receiving side, the information transmitting and receiving apparatus 104a and the information reproducing apparatus 105a (or the data obtaining apparatus 504 and the reproducing apparatus 505) are separate apparatuses, the present invention is not limited thereto; for example, the apparatuses may be realized as an integral-type terminal apparatus having the functions of both. As a concrete example of such a terminal apparatus, a terminal apparatus can be realized, for example, by structuring an apparatus comprising a semiconductor player (see the portable music player 151 of FIG. 5) to which a receiving function is added.

That is, such a terminal apparatus of the present invention is, for example, a terminal apparatus of receiving distribution of data through a network from a server of performing the distribution of the data the number of times based on a predetermined criterion, and reproducing the data, said apparatus comprising:
a data obtaining apparatus of obtaining at least a principal part of the distributable data, the data distributed as voice data from the server through the network based on (1) a request for distribution of desired data and/or (2) the number of times; and
a reproducing apparatus of reproducing the voice data obtained by the data obtaining apparatus.

Moreover, another example of such a terminal apparatus of the present invention is a terminal apparatus of receiving distribution of data from a server comprising the following (1) to (5) and reproducing the data: (1) a distribution data storing apparatus of storing data that is to be an object of distribution through a network as distributable data; (2) a selected information accepting apparatus of accepting selected information from a receiving side for selecting identification information of the data being desired by use of a predetermined list; (3) a selected information storing apparatus of storing the selected information accepted by the selected information accepting apparatus; (4) an individual list creating apparatus of creating, as an individual list, a list which is a part of the predetermined list and at least includes identification information of data common to the selected information stored in the selected information storing apparatus and the distributable data; and (5) a data distributing apparatus of performing the distribution of the data based on a predetermined request for distribution, said apparatus comprising:
a distribution requesting apparatus of identifying the data of which distribution is desired based on the created individual list, and transmitting the data to the server as the request for distribution.

While in the above-described embodiments, the server of the present invention is described as one server 101a integrally provided with the information providing apparatus 110 to the information distributing apparatus 116a, for example, as shown in FIG. 1, the present invention is not limited thereto: for example, the server may be separated into a first server (for example, a data registering server) comprising the information accepting apparatus 111 and the information storing apparatus 110, and a second server (for example, a data distributing server) comprising the selected information storing apparatus 121, the selected information accepting apparatus 113, the distribution information storing apparatus 114a, the list distributing apparatus 115a and the information distributing apparatus 116a. The same applies to the servers shown in FIGs. 7, 8, 10 and 11.

Moreover, the present invention is a program of causing functions of all or some of the means (or apparatuses, devices, circuits, parts or the like) of the data distributing system, the data transmitting apparatus, the server, the data providing apparatus, the terminal apparatus or the data reproducing terminal apparatus of the present invention to be performed by a computer, said program operating in concert with the computer.

Moreover, the present invention is a program of causing operations of all or some of the steps (or processes, operations, workings or the like) of the data distributing method of the present invention to be performed by a computer, said program operating in concert with the computer.

Moreover, the present invention is a medium carrying a program of causing all or some of the operations of all or some of the steps of the data distributing system, the data transmitting apparatus, the server, the data providing apparatus, the terminal apparatus or the data reproducing terminal apparatus of the present invention to be performed by a computer, said medium being computer-readable, said program that is read out performing the operations in concert with the computer.

Moreover, the present invention is a medium carrying a program of causing all or some of the functions of all or some of the means of the data distributing method of the present invention to be performed by a computer, said medium being computer-readable, said program that is read out performing the functions in concert with the computer.

Some of the means (or apparatuses, devices, circuits, parts or the like) of the present invention and some of the steps (or processes, operations, workings or the like) of the present invention mean some means or steps of the plural means or steps, or mean some functions or some operations of one means or step.

Moreover, some of the apparatuses (or devices, circuits, parts or the like) of the present invention means some apparatuses of the plural apparatuses, some means (or devices, circuits, parts or the like) of one apparatus, or some functions of one means.

Moreover, a recording medium being computer-readable and on which the program of the present invention is recorded is also included in the present invention.

Moreover, a usage of the program of the present invention may be such that the program is recorded on a computer-readable recording medium and operates in concert with a computer.

Moreover, a usage of the program of the present invention may be such that the program is transmitted over a transmission medium, is read out by a computer and operates in concert with the computer.

Moreover, examples of the recording medium include ROMs, and examples of the transmission medium include transmission media such as the Internet, light, radio waves and sound waves.

Moreover, the above-mentioned computer of the present invention is not limited to pure hardware such as a CPU, but may include firmware, an OS, and peripherals.

As described above, the structure of the present invention may be implemented either via software or via hardware.

As described above, since the present invention is, for example, a voice information distributing system of individually distributing voice information to at least one user based on selected information indicating at least one piece of voice information individually selected by the user from among at least one piece of voice information provided by at least one information provider through a network, said voice information distributing system comprising: an information providing apparatus of providing voice information; an information accepting apparatus of accepting the voice information provided by the information providing apparatus; an accepted information storing apparatus of storing the voice information accepted by the information accepting apparatus; a selected information accepting apparatus of presenting to the user a list of voice information stored in the information storing apparatus, making the user make a selection, and accepting the information selected by the user; a selected information storing apparatus of storing the selected information accepted by the selected information accepting apparatus; a distribution information storing apparatus of copying and storing, of the voice information stored in the accepted information storing apparatus, distributable voice information; a list distributing apparatus of distributing a distribution information list created based on the selected information stored in the selected information storing apparatus and the distributable voice information stored in the distribution information storing apparatus; an information distributing apparatus of distributing the distributable voice information stored in the distribution information storing apparatus; an information transmitting and receiving apparatus of transmitting the selected information to the selected information accepting apparatus through the network, receiving the voice information from the information distributing apparatus based on the distribution information list received from the list distributing apparatus, and storing the received voice information; and an information reproducing apparatus of reproducing the voice information received and stored by the information transmitting and receiving apparatus, an advantageous effect is obtained that a voice information distributing system can be provided with which the user can enjoy contents comprising voice information of contents desired by him or her.

Moreover, since the present invention is, for example, such that in the voice information distributing system of the present invention, the list distributing apparatus is capable of creating a distribution information list containing selected information indicating information other than the voice information indicated by the selected information stored in the selected information storing apparatus, an advantageous effect is obtained that a voice information distributing system can be provided with which not only the voice information provided by the information provider but also other information such as CM voice information can be enjoyed.

Moreover, since the present invention is, for example, such that in the voice information distributing system of the present invention, the list distributing apparatus distributes to the information transmitting and receiving apparatus a distribution information list containing location information indicating the location of the information distributing apparatus, and the information transmitting and receiving apparatus receives voice information from the information distributing apparatus indicated by the location information contained in the received distribution information list and stores the received voice information, an advantageous effect is obtained that a highly convenient voice information distributing system cyan be provided where it is unnecessary to tailor the information transmitting and receiving apparatus even when the location of the list distributing apparatus is changed.

Moreover, since the present invention is, for example, such that in the voice information distributing system of the present invention, the information transmitting and receiving apparatus receives voice information from the information distributing apparatus indicated by the location information contained in the received distribution information list and stores the received voice information, the location information contained in the distribution information list is replaced from the information distributing apparatus to the information transmitting and receiving apparatus and stored, and the information reproducing apparatus reproduces the voice information stored in the information transmitting and receiving apparatus which voice information is indicated by the distribution information list, after the replacement of the location information, stored in the information transmitting and receiving apparatus, an advantageous effect is obtained that a voice information distributing system can be provided where the received distribution information list is effectively used as a reproduction order specifying list (play list) necessary for the information reproducing apparatus.

Moreover, since the present invention is, for example, such that in the voice information distributing system of the present invention, the information transmitting and receiving apparatus adds the information contained in the distribution information list to the voice information received from the information distributing apparatus, and stores the voice information, an advantageous effect is obtained that a voice information distributing system can be provided with which the user can enjoy displaying not only the voice information provided by the information provider but also other information with a music reproducer incorporating the function of displaying the attribute information added to the voice information.

Moreover, since the present invention is, for example, such that in the voice information distributing system of the present invention, the information transmitting and receiving apparatus is capable of expressing the information contained in the distribution information list, an advantageous effect is obtained that a voice information distributing system can be provided with which the user can enjoy at the same time information of contents other than the contents comprising voice information of contents desired by him or her.

Moreover, since the present invention is, for example, such that'in the voice information distributing system of the present invention, the distribution information storing apparatus and the information distributing apparatus comprise a plurality of pairs; of the voice information stored in the accepted information storing apparatus, the distributable voice information is stored so as to be dispersed to the plural distribution information storing apparatuses; and the distribution information list contains the location information of the information distributing apparatuses paired with the plural distribution information storing apparatuses in which the voice information is stored so as to be dispersed, an advantageous effect is obtained that a voice information distributing system can be provided where the load on the information storing apparatus and the information distributing apparatus is dispersed.

Moreover, since the present invention is, for example, such that in the voice information distributing system of the present invention, the list distribution apparatus comprises a plurality of list distribution apparatuses, and the information transmitting and receiving apparatus can be instructed to receive the distribution information list from another list distributing apparatus, an advantageous effect is obtained that a voice information distributing system can be provided where the load on the list distributing apparatus is distributed.

Moreover, since the present invention is, for example, such that in the voice information distributing system of the present invention, the distribution information list contains expiration date information of the voice information, and the information reproducing apparatus reproduces only voice information of which expiration date coincides with that indicated by the expiration date information, an advantageous effect is obtained that a voice information distributing system can be provided with which contents excluding voice information of contents unnecessary for the user can be enjoyed.

Moreover, since the present invention is, for example, such that in the voice information distributing system of the present invention, the information reproducing apparatus is capable of reproducing the voice information stored in the information transmitting and receiving apparatus after converting it to a different information format, an advantageous effect is obtained that a voice information distributing system can be provided with which the user can enjoy contents comprising voice information of contents desired by him or her in a format suitable for the situation.

Moreover, since the present invention is, for example, such that in the voice information distributing system of the present invention, the information accepting apparatus is capable of converting the voice information provided by the information providing apparatus to an information format storable in the information storing apparatus, an advantageous effect is obtained that a voice information distributing system can be provided with which the load of converting the information format can be reduced when the information provider provides voice information.

Moreover, since the present invention is, for example, such that in the voice information distributing system of the present invention, the network is the Internet, the information providing apparatus is a personal computer connected to the Internet and incorporating a software program of transmitting voice information to the information accepting apparatus, the information accepting apparatus and the selected information accepting apparatus are WWW servers connected to the Internet, the list distributing apparatus and the information distributing apparatus are file servers connected to the Internet, the information transmitting and receiving apparatus is a personal computer connected to the Internet and incorporating a software program of receiving files from the file servers, and the information reproducing apparatus is a personal computer incorporating a voice information reproducing software program, an advantageous effect is obtained that a voice information distributing system can be provided with which the user can easily enjoy contents comprising voice information of contents desired by him or her by use of his or her personal computer having the function of connecting to the Internet.

Moreover, since the present invention is, for example, a voice information distribution service using the voice information distributing system of the present invention in which selection information indicating CM voice information, and CM character information are contained in the distribution information list, and by the distribution information list being distributed to the user by the list distributing apparatus, the service provider of the voice information distribution service obtains an advertisement fee from the advertiser of the CM voice information and the CM character information as a profit, an advantageous effect is obtained that a new information service of providing voice information through the Internet can be realized.

Moreover, since the present invention is, for example, a voice information distribution service using the voice information distributing system of the present invention in which with respect to the voice information provided by the information provider, the information provider obtains an information provision fee from the service provider of the voice information service as a profit in accordance with the number of, of the pieces of selected information of all the users accepted by the selected information accepting apparatus, the pieces of selected information indicating the voice information, an advantageous effect is obtained that a new information service of providing voice information through the Internet can be realized.

Moreover, since the present invention is, for example, a voice information distributing system of individually distributing information to at least one user based on selected information indicating at least one piece of information individually selected by the user from among at least one piece of information provided by at least one information provider through a network, said information distributing system comprising: an information providing apparatus of providing information; an information accepting apparatus of accepting the information provided by the information providing apparatus; an accepted information storing apparatus of storing the information accepted by the information accepting apparatus; a selected information accepting apparatus of presenting to the user a list of information stored in the information storing apparatus, making the user make a selection, and accepting the information selected by the user; a selected information storing apparatus of storing the selected information accepted by the selected information accepting apparatus; a distribution information storing apparatus of copying and storing, of the information stored in the accepted information storing apparatus, distributable voice information; a list distributing apparatus of distributing a distribution information list created based on the selected information stored in the selected information storing apparatus and the distributable information stored in the distribution information storing apparatus; an information distributing apparatus of distributing the distributable information stored in the distribution information storing apparatus; an information transmitting and receiving apparatus of transmitting the selected information to the selected information accepting apparatus through the network, receiving the information from the information distributing apparatus based on the distribution information list received from the list distributing apparatus, and storing the received information; and an information expressing apparatus of expressing the information received and stored by the information transmitting and receiving apparatus, an advantageous effect is obtained that an information distributing system enabling distribution of large-scale information can be provided.

Moreover, since the present invention is, for example, such that in the information distributing system of the present invention, the network is the Internet, the information providing apparatus is a personal computer connected to the Internet and incorporating a software program of transmitting information to the information accepting apparatus, the information accepting apparatus and the selected information accepting apparatus are WWW servers connected to the Internet, the list distributing apparatus and the information distributing apparatus are file servers connected to the Internet, the information transmitting and receiving apparatus is a personal computer connected to the Internet and incorporating a software program of receiving files from the file servers, and the information expressing apparatus is a personal computer incorporating an information expressing software program, an advantageous effect is obtained that an information distributing system can be provided enabling the user to receive distribution of large-scale information by use of his or her personal computer having the function of connecting to the Internet.

### INDUSTRIAL APPLICABILITY

As is apparent from the above description, the present invention offers an advantage, for example, that a data distributing system can be provided with which the user can enjoy voice information comprising contents desired by him or her.

Moreover, the present invention offers an advantage, for example, that a new data distribution service of providing voice information through the Internet can be provided.

Moreover, the present invention offers an advantage, for example, that a data distributing system can be provided enabling large-scale information to be distributed without any load on the user.

## Claims

1. A data distributing system of performing distribution of data through a network the number of times based on a predetermined criterion, said data distributing system comprising:
a data providing apparatus of providing data that is to be an object of said distribution;
a data accepting apparatus of accepting data provided by said data providing apparatus;
a distribution data storing apparatus of storing, as distributable data, all or part of data accepted by said data accepting apparatus;
a data distributing apparatus of distributing, as voice data, at least a principal part of the distributable data through the network based on (1) a request for distribution of data desired by a receiving side and/or (2) the number of times;
a data obtaining apparatus of obtaining the data distributed by said data distributing apparatus; and
a reproducing apparatus of reproducing the voice data obtained by said data obtaining apparatus.

2. A data distributing system according to claim 1, comprising:
a selected information accepting apparatus of accepting, through the network, selected information from the receiving side for selecting identification information of the desired data by use of a predetermined list;
a selected information storing apparatus of storing the selected information accepted by said selected information accepting apparatus;
an individual list distributing apparatus of creating, as an individual list, a list by means of extracting identification information of data common to both the stored selected information and the distributable data, and distributing the individual list to the receiving side; and
a distribution requesting apparatus of requesting distribution of the data desired by the receiving side as the request for distribution from the receiving side based on the distributed individual list,
wherein said data distributing apparatus distributes the data based on the request for distribution from said distribution requesting apparatus.

3. A data distributing system according to claim 2, comprising a data storing apparatus of temporarily storing all of the data accepted by said data accepting apparatus,
wherein said distributable data is, of the data stored in the data storing apparatus, data that is determined to be distributable based on a predetermined criterion and is copied and stored in said distribution data storing apparatus, and
said selected information accepting apparatus transmits, as the predetermined list, a full list which is a list containing identification information of all of the data stored in said data storing apparatus, to said data obtaining apparatus through the network when an access is made from the receiving side.

4. A data distributing system according to claim 3,
wherein said individual list distributing apparatus adds CM data for making an advertisement to the individual list, and distributes the individual list to said data obtaining apparatus.

5. A data distributing system according to claim 3,
wherein said individual list distributing apparatus adds, to the individual list, location information indicating an address at which said data distributing apparatus is located, and distributes the individual list to said data obtaining apparatus, and
the request for distribution by said distribution requesting apparatus is made based on the location information.

6. A data distributing system according to claim 5,
wherein said data obtaining apparatus, after the distributed data is obtained and stored, replaces the location information included in the individual list with address information of an area in which the storage is performed, and
s aid reproduction is performed based on the address information.

7. A data distributing system according to claim 4,
wherein said data obtaining apparatus adds, to the obtained data, the CM data distributed being added to the individual list, and stores the data.

8. A data distributing system according to claim 7,
wherein said reproducing apparatus comprises a display of displaying character data and/or image data;
said CM data includes character data and/or image data; and
the character data and/or the image data included in the stored CM data is displayed by use of said display.

9. A data distributing system according to claim 5, wherein said distribution data storing apparatus and said data distributing apparatus are provided in a plural number, the distributable data of the data stored in said data storing apparatus is copied and stored so as to be dispersed to said plural distribution data storing apparatuses, said data distributing apparatus and said distribution data storing apparatus have a predetermined correspondence with each other, and said location information is generated based on the dispersion of the distributable data to said plural distribution data storing apparatuses.

10. A data distributing system according to claim 3, wherein said individual list distributing apparatus is provided in a plural number, and
to said individual list, information for said data obtaining apparatus to change the individual list distributing apparatus to which the individual list is to be distributed thereafter is added.

11. A data distributing system according to claim 8, wherein said individual list includes expiration date data indicating an expiration date of the CM data; and
said CM data is reproduced based on the expiration date data.

12. A data distributing system according to claim 3,
wherein said reproducing apparatus reproduces the data obtained by the data obtaining apparatus after converting all or part of the data into a different format.

13. A data distributing system according to claim 12, comprising a character display apparatus of displaying character data,
wherein said reproducing the obtained data after converting all or part of the data into a different format is that (1) of the obtained data, all or part of voice data is converted into character data and the character data is displayed by use of said character display apparatus or that (2) when the obtained data includes character data, all or part of the character data is converted into voice data and the voice data is reproduced by use of said reproducing apparatus.

14. A data distributing system according to claim 3,
wherein a principal part, distributed as the voice data, of the provided data that is to be an object of distribution is held as voice data.

15. A data distributing system according to claim 3, comprising a data converting apparatus of converting the provided data to distribute at least a principal part of the distributable data as voice data through the network.

16. A data distributing system according to claim 3,
wherein to the data that is to be an object of distribution, valid region information indicating a region where the distribution is effectively performed is added,
said receiving side transmits, together with said request for distribution, current location information indicating a current location where the request for distribution is made; and
said distribution of the data by said data distributing apparatus is performed based on the added valid region information and the transmitted current location information.

17. A data distributing system according to claim 3, wherein said network is the Internet;
said data providing apparatus is a personal computer connected to the Internet and incorporating a software program of performing the provision;
means including said data accepting apparatus and said selected information accepting apparatus is a WWW server connected to the Internet;
said individual list distributing apparatus is a file server connected to the Internet;
said data distributing apparatus is a file server connected to the Internet;
said data obtaining apparatus is a personal computer connected to the Internet and incorporating a software program of performing the reception; and
said reproducing apparatus is a personal computer incorporating a software program of performing the reproduction.

18. A data distributing system according to claim 1, comprising a distribution data identification information accepting apparatus of accepting, through the network, distribution data identification information, from the receiving side, for identifying identification information of the desired data by use of a predetermined list,
wherein said data distributing apparatus extracts data that is to be an object of distribution, from the stored distributable data based on the accepted distribution data identification information, and distributes the extracted data to the receiving side.

19. A data distributing system according to claim 18,
wherein said data of which distribution is desired by the receiving side is data to be distributed over a plural number of times and contents of the pieces of data transmitted at the plural number of times are associated with each other,
said distribution data identification information includes reservation information indicating that the plural number of times of distribution is reserved, and
said data distributing apparatus performs the distribution based on the plural number of times.

20. A data distributing system according to claim 19,
wherein said predetermined list is a full list containing identification information of all of the accepted data and distributed to the receiving side through the network.

21. A data distributing system according to claim 2,
wherein said individual list is updated based on the request for distribution from the receiving side, and is distributed to the receiving side.

22. A data distributing system according to claim 2,
wherein said individual list is automatically updated based on update of the distributable data, and is distributed to the receiving side.

23. A data distributing system comprising:
a distribution data storing apparatus of storing, as distributable data, data that is to be an object of distribution through a network;
a selected information accepting apparatus of accepting selected information, from a receiving side, for selecting identification information of the data being desired by use of a predetermined list;
a selected information storing apparatus of storing the selected information accepted by said selected information accepting apparatus;
an individual list creating apparatus of creating, as an individual list, a list which is a part of the predetermined list and at least includes identification information of data common to the selected information stored in said selected information storing apparatus and the distributable data;
a distribution requesting apparatus of identifying data of which distribution is desired based on the created individual list, and transmitting the data from the receiving side as a request for distribution; and
a data distributing apparatus of performing distribution of the data based on the request for distribution from said distribution requesting apparatus.

24. A data distributing system according to claim 23, wherein said predetermined list also contains data that is not distributable at the point of time when the selected information is accepted, but can become distributable after the point of time;
said selection of the data being desired is (1) a request for distribution of data which is distributable at the point of time and/or (2) a reservation of distribution of data which can become distributable after the point of time; and
said individual list creating apparatus inserts the reserved data as the distributable data into the individual list created after the point of time when the reserved data becomes distributable.

25. A data distributing system according to claim 24,
wherein said individual list is updated based on the request for distribution from the receiving side, and is distributed to the receiving side.

26. A data distributing system according to claim 24,
wherein said individual list is automatically updated when the reserved data becomes distributable, and is distributed to the receiving side.

27. A data distributing system according to claim 23,
wherein to said data that is to be an object of distribution, valid region information indicating a region where the distribution is effectively performed is added;
said receiving side transmits, together with the request for distribution, current location information indicating a location where the request for distribution is made; and
said distribution of the data by said data distributing apparatus is performed based on the added valid region information and the transmitted current location information.

28. A data distributing system according to claim 23, wherein said network is the Internet;
said selected information accepting apparatus is a WWW server connected to the Internet;
said individual list distributing apparatus is a file server connected to the Internet;
said distribution requesting apparatus is a personal computer connected to the Internet and incorporating a software program of performing transmission as the request for distribution; and
said data distributing apparatus is a file server connected to the Internet.

29. A data distributing method of a data distribution service provider performing data distribution service by using the data distributing system according to claim 4, wherein said CM data comprises CM voice data for making an advertisement by voice and/or CM character data for making an advertisement by characters which CM voice data and/or CM character data is provided by an advertiser; and
said data distribution service provider obtains an advertisement fee from the advertiser.

30. A data distributing method according to claim 29,
wherein said data provider obtains a data provision fee from the data distribution service provider based on a selected data acceptance condition from a user.

31. A data distributing system comprising:
storing means of storing data;
distributing means of distributing data stored in said storing means;
network means of performing the distribution of the data by said distributing means; and
terminal means of receiving data distributed through said network means,
wherein said distribution is performed the number of times based on a predetermined criterion as distribution of data including voice data.

32. A data distributing apparatus comprising:
storing means of storing data; and
distributing means of distributing data stored in said storing means to a user's terminal through a network,
wherein said distribution is performed the number of times based on a predetermined criterion as distribution of data including voice data.

33. A data distributing system comprising:
storing means of storing data;
distributing means of distributing data stored in said storing means;
network means of performing the distribution of the data by said distributing means; and
terminal means of receiving data distributed through said network means,
wherein said distribution is performed as distribution of data including data other than music data as voice data.

34. A data distributing apparatus comprising:
storing means of storing data; and
distributing means of distributing data stored in said storing means to a user's terminal through a network,
wherein said distribution is performed as distribution of data including data other than music data as voice data.

35. A server of performing distribution of data through a network the number of times based on a predetermined criterion, said server comprising:
a data accepting apparatus of accepting provision of the data that is to be an object of distribution;
a distribution data storing apparatus of storing, as distributable data, all or part of the data accepted by said data accepting apparatus; and
a data distributing apparatus of distributing, as voice data, at least a principal part of the distributable data through the network based on (1) a request for distribution of data desired by a receiving side and/or (2) the number of times.

36. A server comprising:
a distribution data storing apparatus of storing, as distributable data, data that is to be an object of distribution through a network;
a selected information accepting apparatus of accepting selected information, from a receiving side, for selecting identification information of the data being desired by use of a predetermined list;
a selected information storing apparatus of storing the selected information accepted by said selected information accepting apparatus;
an individual list creating apparatus of creating, as an individual list, a list which is a part of the predetermined list and at least includes identification information of data common to the selected information stored in said selected information storing apparatus and the distributable data; and
a data distributing apparatus of performing distribution of the data based on a request for distribution of the data of which distribution is desired which data is identified by the receiving side based on the created individual list.

37. A server comprising:
storing means of storing data; and
distributing means of distributing data stored in said storing means,
wherein said distribution of the data to a terminal apparatus by said distributing means through network means is performed the number of times based on a predetermined criterion as distribution of data including voice data.

38. A server comprising:
storing means of storing data; and
distributing means of distributing data including, as voice data, data that is other than music data and is stored in said storing means to a terminal, through network means.

39. A data providing apparatus of providing, through a network, data that is to be an object of distribution, to a server of performing distribution of the data to a terminal side the number of times based on a predetermined criterion,
said server comprising:
a data accepting apparatus of accepting the data provided by said data providing apparatus;
a distribution data storing apparatus of storing, as distributable data, all or part of the data accepted by said data accepting apparatus; and
a data distributing apparatus of distributing, as voice data, at least a principal part of the distributable data through the network based on (1) a request for distribution of data desired by a receiving side and/or (2) the number of times.

40. A data providing apparatus of providing, through a network, data that is to be an object of distribution, to a server of performing distribution of the data to a terminal side,
said server comprising:
a distribution data storing apparatus of storing, as distributable data, the data that is to be an object of distribution through the network;
a selected information accepting apparatus of accepting selected information from a receiving side for selecting identification information of the data being desired by use of a predetermined list;
a selected information storing apparatus of storing the selected information accepted by said selected information accepting apparatus;
an individual list creating apparatus of creating, as an individual list, a list which is a part of the predetermined list and at least includes identification information of data common to the selected information stored in said selected information storing apparatus and the distributable data; and
a data distributing apparatus of performing the distribution of the data based on a request for distribution of the data of which distribution is desired which data is identified by the receiving side based on the created individual list.

41. A data providing apparatus of providing, through a network, data that is to be an object of distribution, to a server of performing distribution of the data to a terminal,
said server comprising:
storing means of storing data; and
distributing means of distributing data stored in said storing means to the terminal through the network,
wherein said distribution of the data by said distributing means is performed the number of times based on a predetermined criterion as distribution of data including voice data.

42. A data providing apparatus of providing, through a network, data that is to be an object of distribution, to a server of performing distribution of the data to a terminal,
said server comprising:
storing means of storing data; and
distributing means of distributing data including, as voice data, data that is other than music data and is stored in said storing means to the terminal through network means.

43. A terminal apparatus of receiving distribution of data through a network from a server of performing the distribution of the data the number of times based on a predetermined criterion, and reproducing the data, said terminal apparatus comprising:
a data obtaining apparatus of obtaining at least a principal part of distributable data, the data distributed as voice data from said server through the network based on (1) a request for distribution of desired data and/or (2) the number of times; and
a reproducing apparatus of reproducing the voice data obtained by the data obtaining apparatus.

44. A terminal apparatus of receiving distribution of data from a server comprising the following (1) to (5) and reproducing the data: (1) a distribution data storing apparatus of storing data that is to be an object of distribution through a network as distributable data; (2) a selected information accepting apparatus of accepting selected information from a receiving side for selecting identification information of the data being desired by use of a predetermined list; (3) a selected information storing apparatus of storing the selected information accepted by said selected information accepting apparatus; (4) an individual list creating apparatus of creating, as an individual list, a list which is a part of the predetermined list and at least includes identification information of data common to the selected information stored in said selected information storing apparatus and the distributable data; and (5) a data distributing apparatus of performing the distribution of the data based on a predetermined request for distribution, said terminal apparatus comprising:
a distribution requesting apparatus of identifying the data of which distribution is desired based on the created individual list, and transmitting the data to the server as the request for distribution.

45. A terminal apparatus comprising:
terminal means of receiving data distributed through network means; and
reproducing means of reproducing the received data,
wherein said distribution is performed the number of times based on a predetermined criterion as distribution of data including voice data.

46. A terminal apparatus comprising:
terminal means of receiving data distributed through network means; and
reproducing means of reproducing the received data,
wherein said distribution is performed as distribution of data including data other than music data as voice data.

47. A data reproducing terminal apparatus of reproducing data distributed from a server of performing data distribution the number of times based on a predetermined criterion, said data reproducing terminal apparatus comprising:
a reproducing apparatus of reproducing at least a principal part of distributable data, the voice data distributed as voice data from said server through the network based on (1) a request for distribution of data desired by a receiving side and/or (2) the number of times.

48. A data reproducing terminal apparatus comprising reproducing means of reproducing data distributed from a server comprising: (1) a distribution data storing apparatus of storing data that is to be an object of distribution through a network as distributable data; (2) a selected information accepting apparatus of accepting selected information from a receiving side for selecting identification information of the data being desired by use of a predetermined list; (3) a selected information storing apparatus of storing the selected information accepted by said selected information accepting apparatus; (4) an individual list creating apparatus of creating, as an individual list, a list which is a part of the predetermined list and at least includes identification information of data common to the selected information stored in said selected information storing apparatus and the distributable data; and (5) a data distributing apparatus of performing the data distribution based on a request for distribution of the data of which distribution is desired which data is identified by the receiving side based on the created individual list.

49. A data reproducing terminal apparatus comprising reproducing means of reproducing data distributed through network means and received,
wherein said distribution is performed the number of times based on a predetermined criterion as distribution of data including voice data.

50. A data reproducing terminal apparatus comprising reproducing means of reproducing data distributed through network means and received,
wherein said distribution is performed as distribution of data including data other than music data as voice data.

51. A program of causing a computer to function as all or part of said apparatuses or means of the present invention according to any of claims 1 to 28 and 31 to 50.

52. A program of causing a computer to execute all or part of said steps of the present invention according to claim 29 or 30.

53. A medium carrying a program of causing a computer to function as all or part of said apparatuses or means of the present invention according to any of claims 1 to 28 and 31 to 50, said medium being **characterized by** being computer-processable.

54. A medium carrying a program of causing a computer to execute all or part of said steps of the present invention according to claim 29 or 30, said medium being **characterized by** being computer-processable.

## Amended claims

### Amended claims under Art. 19.1 PCT

**1.** A data distributing system of performing distribution of data through a network the number of times based on a predetermined criterion, said data distributing system comprising:
a data providing apparatus of providing data that is to be an object of said distribution;
a data accepting apparatus of accepting data provided by said data providing apparatus;
a distribution data storing apparatus of storing, as distributable data, all or part of data accepted by said data accepting apparatus;
a data distributing apparatus of distributing, as voice data, at least a principal part of the distributable data through the network based on (1) a request for distribution of data desired by a receiving side and/or (2) the number of times;
a data obtaining apparatus of obtaining the data distributed by said data distributing apparatus; and
a reproducing apparatus of reproducing the voice data obtained by said data obtaining apparatus.

**2.** A data distributing system according to claim 1, comprising:
a selected information accepting apparatus of accepting, through the network, selected information from the receiving side for selecting identification information of the desired data by use of a predetermined list;
a selected information storing apparatus of storing the selected information accepted by said selected information accepting apparatus;
an individual list distributing apparatus of creating, as an individual list, a list by means of extracting identification information of data common to both the stored selected information and the distributable data, and distributing the individual list to the receiving side; and
a distribution requesting apparatus of requesting distribution of the data desired by the receiving side as the request for distribution from the receiving side based on the distributed individual list,
wherein said data distributing apparatus distributes the data based on the request for distribution from said distribution requesting apparatus.

**3.** A data distributing system according to claim 2, comprising a data storing apparatus of temporarily storing all of the data accepted by said data accepting apparatus,
wherein said distributable data is, of the data stored in the data storing apparatus, data that is determined to be distributable based on a predetermined criterion and is copied and stored in said distribution data storing apparatus, and
said selected information accepting apparatus transmits, as the predetermined list, a full list which is a list containing identification information of all of the data stored in said data storing apparatus, to said data obtaining apparatus through the network when an access is made from the receiving side.

**4.** A data distributing system according to claim 3,
wherein said individual list distributing apparatus adds CM data for making an advertisement to the individual list, and distributes the individual list to said data obtaining apparatus.

**5.** A data distributing system according to claim 3,
wherein said individual list distributing apparatus adds, to the individual list, location information indicating an address at which said data distributing apparatus is located, and distributes the individual list to said data obtaining apparatus, and
the request for distribution by said distribution requesting apparatus is made based on the location information.

**6.** A data distributing system according to claim 5,
wherein said data obtaining apparatus, after the distributed data is obtained and stored, replaces the location information included in the individual list with address information of an area in which the storage is performed, and
said reproduction is performed based on the address information.

**7.** A data distributing system according to claim 4,
wherein said data obtaining apparatus adds, to the obtained data, the CM data distributed being added to the individual list, and stores the data.

**8.** A data distributing system according to claim 7,
wherein said reproducing apparatus comprises a display of displaying character data and/or image data;
said CM data includes character data and/or image data; and
the character data and/or the image data included in the stored CM data is displayed by use of said display.

**9.** A data distributing system according to claim 5, wherein said distribution data storing apparatus and said data distributing apparatus are provided in a plural number,
the distributable data of the data stored in said data storing apparatus is copied and stored so as to be dispersed to said plural distribution data storing apparatuses,
said data distributing apparatus and said distribution data storing apparatus have a predetermined correspondence with each other, and
said location information is generated based on the dispersion of the distributable data to said plural distribution data storing apparatuses.

**10.** A data distributing system according to claim 3,
wherein said individual list distributing apparatus is provided in a plural number, and
to said individual list, information for said data obtaining apparatus to change the individual list distributing apparatus to which the individual list is to be distributed thereafter is added.

**11.** A data distributing system according to claim 8,
wherein said individual list includes expiration date data indicating an expiration date of the CM data; and
said CM data is reproduced based on the expiration date data.

**12.** A data distributing system according to claim 3,
wherein said reproducing apparatus reproduces the data obtained by the data obtaining apparatus after converting all or part of the data into a different format.

**13.** A data distributing system according to claim 12, comprising a character display apparatus of displaying character data,
wherein said reproducing the obtained data after converting all or part of the data into a different format is that (1) of the obtained data, all or part of voice data is converted into character data and the character data is displayed by use of said character display apparatus or that (2) when the obtained data includes character data, all or part of the character data is converted into voice data and the voice data is reproduced by use of said reproducing apparatus.

**14.** A data distributing system according to claim 3,
wherein a principal part, distributed as the voice data, of the provided data that is to be an object of distribution is held as voice data.

**15.** A data distributing system according to claim 3, comprising a data converting apparatus of converting the provided data to distribute at least a principal part of the distributable data as voice data through the network.

**16.** A data distributing system according to claim 3,
wherein to the data that is to be an object of distribution, valid region information indicating a region where the distribution is effectively performed is added,
said receiving side transmits, together with said request for distribution, current location information indicating a current location where the request for distribution is made; and
said distribution of the data by said data distributing apparatus is performed based on the added valid region information and the transmitted current location information.

**17.** A data distributing system according to claim 3,
wherein said network is the Internet;
said data providing apparatus is a personal computer connected to the Internet and incorporating a software program of performing the provision;
means including said data accepting apparatus and said selected information accepting apparatus is a WWW server connected to the Internet;
said individual list distributing apparatus is a file server connected to the Internet;
said data distributing apparatus is a file server connected to the Internet;
said data obtaining apparatus is a personal computer connected to the Internet and incorporating a software program of performing the reception; and
said reproducing apparatus is a personal computer incorporating a software program of performing the reproduction.

**18.** A data distributing system according to claim 1, comprising a distribution data identification information accepting apparatus of accepting, through the network, distribution data identification information, from the receiving side, for identifying identification information of the desired data by use of a predetermined list,
wherein said data distributing apparatus extracts data that is to be an object of distribution, from the stored distributable data based on the accepted distribution data identification information, and distributes the extracted data to the receiving side.

**19.** A data distributing system according to claim 18,
wherein said data of which distribution is desired by the receiving side is data to be distributed over a plural number of times and contents of the pieces of data transmitted at the plural number of times are associated with each other,
said distribution data identification information includes reservation information indicating that the plural number of times of distribution is reserved, and
said data distributing apparatus performs the distribution based on the plural number of times.

**20.** A data distributing system according to claim 19,
wherein said predetermined list is a full list containing identification information of all of the accepted data and distributed to the receiving side through the network.

**21.** A data distributing system according to claim 2,
wherein said individual list is updated based on the request for distribution from the receiving side, and is distributed to the receiving side.

**22.** A data distributing system according to claim 2,
wherein said individual list is automatically updated based on update of the distributable data, and is distributed to the receiving side.

**23.** A data distributing system comprising:
a distribution data storing apparatus of storing, as distributable data, data that is to be an object of distribution through a network;
a selected information accepting apparatus of accepting selected information, from a receiving side, for selecting identification information of the data being desired by use of a predetermined list;
a selected information storing apparatus of storing the selected information accepted by said selected information accepting apparatus;
an individual list creating apparatus of creating, as an individual list, a list which is a part of the predetermined list and at least includes identification information of data common to the selected information stored in said selected information storing apparatus and the distributable data;
a distribution requesting apparatus of identifying data of which distribution is desired based on the created individual list, and transmitting the data from the receiving side as a request for distribution; and
a data distributing apparatus of performing distribution of the data based on the request for distribution from said distribution requesting apparatus.

**24.** A data distributing system according to claim 23,
wherein said predetermined list also contains data that is not distributable at the point of time when the selected information is accepted, but can become distributable after the point of time;
said selection of the data being desired is (1) a request for distribution of data which is distributable at the point of time and/or (2) a reservation of distribution of data which can become distributable after the point of time; and
said individual list creating apparatus inserts the reserved data as the distributable data into the individual list created after the point of time when the reserved data becomes distributable.

**25.** A data distributing system according to claim 24,
wherein said individual list is updated based on the request for distribution from the receiving side, and is distributed to the receiving side.

**26.** A data distributing system according to claim 24,
wherein said individual list is automatically updated when the reserved data becomes distributable, and is distributed to the receiving side.

**27.** A data distributing system according to claim 23,
wherein to said data that is to be an object of distribution, valid region information indicating a region where the distribution is effectively performed is added;
said receiving side transmits, together with the request for distribution, current location information indicating a location where the request for distribution is made; and
said distribution of the data by said data distributing apparatus is performed based on the added valid region information and the transmitted current location information.

**28.** A data distributing system according to claim 23,
wherein said network is the Internet;
said selected information accepting apparatus is a WWW server connected to the Internet;
said individual list distributing apparatus is a file server connected to the Internet;
said distribution requesting apparatus is a personal computer connected to the Internet and incorporating a software program of performing transmission as the request for distribution; and
said data distributing apparatus is a file server connected to the Internet.

**29.** A data distributing method of a data distribution service provider performing data distribution service by using the data distributing system according to claim 4,
wherein said CM data comprises CM voice data for making an advertisement by voice and/or CM character data for making an advertisement by characters which CM voice data and/or CM character data is provided by an advertiser; and
said data distribution service provider obtains an advertisement fee from the advertiser.

**30.** A data distributing method according to claim 29,
wherein said data provider obtains a data provision fee from the data distribution service provider based on a selected data acceptance condition from a user.

**31.** A data distributing system comprising:
storing means of storing data;
distributing means of distributing data stored in said storing means;
network means of performing the distribution of the data by said distributing means; and
terminal means of receiving data distributed through said network means,
wherein said distribution is performed the number of times based on a predetermined criterion as distribution of data including voice data.

**32.** A data distributing apparatus comprising:
storing means of storing data; and
distributing means of distributing data stored in said storing means to a user's terminal through a network,
wherein said distribution is performed the number of times based on a predetermined criterion as distribution of data including voice data.

**33.** (deleted)

**34.** (deleted)

**35.** A server of performing distribution of data through a network the number of times based on a predetermined criterion, said server comprising:
a data accepting apparatus of accepting provision of the data that is to be an object of distribution;
a distribution data storing apparatus of storing, as distributable data, all or part of the data accepted by said data accepting apparatus; and
a data distributing apparatus of distributing, as voice data, at least a principal part of the distributable data through the network based on (1) a request for distribution of data desired by a receiving side and/or (2) the number of times.

**36.** A server comprising:
a distribution data storing apparatus of storing, as distributable data, data that is to be an object of distribution through a network;
a selected information accepting apparatus of accepting selected information, from a receiving side, for selecting identification information of the data being desired by use of a predetermined list;
a selected information storing apparatus of storing the selected information accepted by said selected information accepting apparatus;
an individual list creating apparatus of creating, as an individual list, a list which is a part of the predetermined list and at least includes identification information of data common to the selected information stored in said selected information storing apparatus and the distributable data; and
a data distributing apparatus of performing distribution of the data based on a request for distribution of the data of which distribution is desired which data is identified by the receiving side based on the created individual list.

**37.** A server comprising:
storing means of storing data; and
distributing means of distributing data stored in said storing means,
wherein said distribution of the data to a terminal apparatus by said distributing means through network means is performed the number of times based on a predetermined criterion as distribution of data including voice data.

**38.** (deleted)

**39.** A data providing apparatus of providing, through a network, data that is to be an object of distribution, to a server of performing distribution of the data to a terminal side the number of times based on a predetermined criterion,
said server comprising:
a data accepting apparatus of accepting the data provided by said data providing apparatus;
a distribution data storing apparatus of storing, as distributable data, all or part of the data accepted by said data accepting apparatus; and
a data distributing apparatus of distributing, as voice data, at least a principal part of the distributable data through the network based on (1) a request for distribution of data desired by a receiving side and/or (2) the number of times.

**40.** A data providing apparatus of providing, through a network, data that is to be an object of distribution, to a server of performing distribution of the data to a terminal side,
said server comprising:
a distribution data storing apparatus of storing, as distributable data, the data that is to be an object of distribution through the network;
a selected information accepting apparatus of accepting selected information from a receiving side for selecting identification information of the data being desired by use of a predetermined list;
a selected information storing apparatus of storing the selected information accepted by said selected information accepting apparatus;
an individual list creating apparatus of creating, as an individual list, a list which is a part of the predetermined list and at least includes identification information of data common to the selected information stored in said selected information storing apparatus and the distributable data; and
a data distributing apparatus of performing the distribution of the data based on a request for distribution of the data of which distribution is desired which data is identified by the receiving side based on the created individual list.

**41.** A data providing apparatus of providing, through a network, data that is to be an object of distribution, to a server of performing distribution of the data to a terminal,
said server comprising:
storing means of storing data; and
distributing means of distributing data stored in said storing means to the terminal through the network,
wherein said distribution of the data by said distributing means is performed the number of times based on a predetermined criterion as distribution of data including voice data.

**42.** A data providing apparatus of providing, through a network, data that is to be an object of distribution, to a server of performing distribution of the data to a terminal,
said server comprising:
storing means of storing data; and
distributing means of distributing data including, as voice data, data that is other than music data and is stored in said storing means to the terminal through network means.

**43.** A terminal apparatus of receiving distribution of data through a network from a server of performing the distribution of the data the number of times based on a predetermined criterion, and reproducing the data, said terminal apparatus comprising:
a data obtaining apparatus of obtaining at least a principal part of distributable data, the data distributed as voice data from said server through the network based on (1) a request for distribution of desired data and/or (2) the number of times; and
a reproducing apparatus of reproducing the voice data obtained by the data obtaining apparatus.

**44.** A terminal apparatus of receiving distribution of data from a server comprising the following (1) to (5) and reproducing the data: (1) a distribution data storing apparatus of storing data that is to be an object of distribution through a network as distributable data; (2) a selected information accepting apparatus of accepting selected information from a receiving side for selecting identification information of the data being desired by use of a predetermined list; (3) a selected information storing apparatus of storing the selected information accepted by said selected information accepting apparatus; (4) an individual list creating apparatus of creating, as an individual list, a list which is a part of the predetermined list and at least includes identification information of data common to the selected information stored in said selected information storing apparatus and the distributable data; and (5) a data distributing apparatus of performing the distribution of the data based on a predetermined request for distribution, said terminal apparatus comprising:
a distribution requesting apparatus of identifying the data of which distribution is desired based on the created individual list, and transmitting the data to the server as the request for distribution.

**45.** A terminal apparatus comprising:
terminal means of receiving data distributed through network means; and
reproducing means of reproducing the received data,
wherein said distribution is performed the number of times based on a predetermined criterion as distribution of data including voice data.

**46.** (deleted)

**47.** A data reproducing terminal apparatus of reproducing data distributed from a server of performing data distribution the number of times based on a predetermined criterion, said data reproducing terminal apparatus comprising:
a reproducing apparatus of reproducing at least a principal part of distributable data, the voice data distributed as voice data from said server through the network based on (1) a request for distribution of data desired by a receiving side and/or (2) the number of times.

**48.** A data reproducing terminal apparatus comprising reproducing means of reproducing data distributed from a server comprising: (1) a distribution data storing apparatus of storing data that is to be an object of distribution through a network as distributable data; (2) a selected information accepting apparatus of accepting selected information from a receiving side for selecting identification information of the data being desired by use of a predetermined list; (3) a selected information storing apparatus of storing the selected information accepted by said selected information accepting apparatus; (4) an individual list creating apparatus of creating, as an individual list, a list which is a part of the predetermined list and at least includes identification information of data common to the selected information stored in said selected information storing apparatus and the distributable data; and (5) a data distributing apparatus of performing the data distribution based on a request for distribution of the data of which distribution is desired which data is identified by the receiving side based on the created individual list.

**49.** A data reproducing terminal apparatus comprising reproducing means of reproducing data distributed through network means and received,
wherein said distribution is performed the number of times based on a predetermined criterion as distribution of data including voice data.

**50.** (deleted)

**51.** A program of causing a computer to function as all or part of said apparatuses or means of the present invention according to any of claims 1 to 28 and 31 to 50.

**52.** A program of causing a computer to execute all or part of said steps of the present invention according to claim 29 or 30.

**53.** A medium carrying a program of causing a computer to function as all or part of said apparatuses or means of the present invention according to any of claims 1 to 28 and 31 to 50, said medium being **characterized by** being computer-processable.

**54.** A medium carrying a program of causing a computer to execute all or part of said steps of the present invention according to claim 29 or 30, said medium being **characterized by** being computer-processable.
